# EUROPEAN PATENT APPLICATION

(11) **EP 2 584 406 A2**
(43) Date of publication of application: **24.04.2013**
(21) Application number: 11795913.0
(22) Date of filing: 03.06.2011
(51) Int. Cl.: G03B 35/04, G03B 35/00

(54) **DEVICE FOR OPTICAL AXIS ALIGNMENT FOR IMAGE CAPTURING AND METHOD FOR ALIGNING AN OPTICAL AXIS**

(30) Priority: 01.06.2011 KR 20110052695; 16.06.2010 KR 20100057236
(71) Applicant: Cinetools Co., Ltd, Gyeonggi-do 472-060 (KR)
(72) Inventor: HUH, Sung Ryong, Seoul 136-052 (KR)
(74) Representative: Capasso, Olga
(86) International application number: PCT/KR2011/004084
(87) International publication number: WO 2011/159047

(57) **Abstract**

Disclosed is an optical axis alignment apparatus of a camera for photographing a three-dimensional (3D) image that supports optical axes of left-eye and right-eye cameras horizontally disposed to be separate from each other to be positioned on the same plane, the apparatus including: a first reference portion disposed for each of the left-eye and right-eye cameras and formed with a first reference line and formed to be visible; a second reference portion separate from the first reference portion to face the first reference portion, and formed with a second reference line that is positioned on the same plane as the first reference line; and an alignment portion to move the first reference portion and the second reference portion so that an optical axis of any one camera between the left-eye and right-eye cameras is positioned on the same plane constituted by the first reference line and the second reference line. Accordingly, it is possible to remove a vertical error that occurs when performing optical axis alignment using a conventional signboard and thereby, it is possible to perform 3D image photographing with excellent precision. Accordingly, it is possible to remove a vertical error that occurs when performing optical axis alignment using a conventional signboard and thereby, it is possible to perform 3D image photographing with excellent precision.

## Description

### [Technical Field]

The present invention relates to an alignment apparatus and an alignment method, and more particularly, to an optical axis alignment apparatus and an optical axis alignment method of a camera for photographing an image.

### [Background Art]

A person feels three-dimensional (3D) effect due to disparity between a left eye and a right eye, that is, a difference between information observed from the left eye and information observed from the right eye. Accordingly, photographing is generally performed using two cameras in order to realize a 3D image.

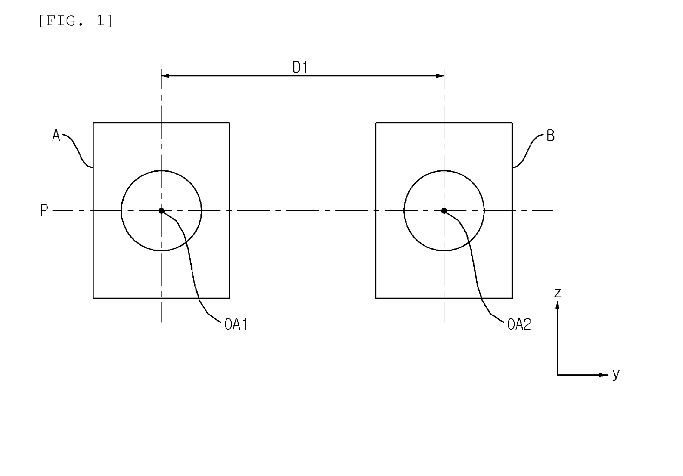

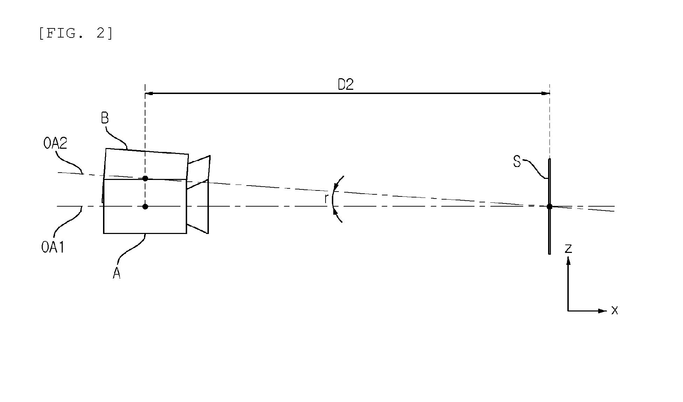

FIG. 1 is a schematic front view illustrating a state in which optical axes of left-eye and right-eye cameras configured for 3D image photographing are horizontally aligned, and FIG. 2 is a conceptual diagram to describe an error that occurs when optical axes of left-eye and right-eye cameras do not horizontally align in the case of 3D image photographing.

When a line (hereinafter, referred to as an "optical axis") that connects a center of a camera lens and a center of an image sensor is referred to as an optical axis, and when two cameras are horizontally disposed to be separate from each other, optical axes of two cameras are positioned on the same plane. Regardless of an alignment scheme (a parallel-axis scheme, an orthogonal scheme, and the like) of two cameras, optical axes of corresponding two cameras need to be horizontally aligned on the same plane in order to photograph a 3D image.
Referring to FIG. 1, a horizontal alignment state of optical axes of two cameras refers to a state in which an optical axis (OA1) of a left-eye camera (A) and an optical axis (OA2) of a right-eye camera (B) are positioned on the same plane (P) when the left-eye camera (A) and the right-eye camera (B) are disposed at a predetermined distance (D1).

In the case of photographing a 3D image, the horizontal alignment state of optical axes of two cameras is a preset condition required to obtain an excellent quality of a 3D image. When optical axes of two cameras are not horizontally aligned, the quality of 3D image is degraded and a retouching operation for compensating for the degraded quality increases. Even though the retouching operation is performed, there are some constraints in obtaining a high quality 3D image.

Hereinafter, it will be described in detail with reference to FIG. 2.

Referring to FIG. 2, when a case in which a 3D image is photographed by focusing on a subject separate away by distance D2 is assumed, initially, optical axis alignment of any one main camera (A of FIG. 2) between left-eye and right-eye cameras may be performed. A signboard (S) for alignment is disposed at a position corresponding to the distance D2, a horizontal line passing the optical axis (OA1) of the camera (A) may be fitted for a horizontal line indicated on the signboard (S) for alignment. Here, the horizontal line passing the optical axis (OA1) of the camera (A) is displayed on a view finder of the corresponding camera (A) or a separate monitoring apparatus indicating the view finder.

Next, optical axis alignment of the remaining camera (B of FIG. 2) may be performed by adjusting a rig of the camera (B) to align a horizontal line passing the optical axis (OA2) of the remaining camera (B) align on the horizontal line displayed on the signboard (S) for alignment.

By controlling vergence through rotation of two cameras, a focus may be adjusted.

However, when a camera rotates for movement of the camera or controlling of a focus and vergence, or due to an error of a rig moving the camera, positions of optical axes of left-eye and right-eye cameras may be deviated from the same plane.

In particular, when a rotation center of a go-near stage is not positioned on an optical axis of a camera, optical axes of left-eye and right-eye cameras may not be horizontally aligned.

In this case, as illustrated in FIG. 2, it can be seen at a point (a point separate from the camera by D2) at which the signboard (S) for alignment is positioned that the optical axes (OA1 and OA2) of the left-eye and right-eye cameras (A and B) are temporally horizontally aligned. However, it can be verified at a position at which the signboard (S) for alignment is not positioned that the optical axes (OA1 and OA2) of the left-eye and right-eye cameras (A and B) are not horizontally aligned. Since the two optical axes (OA1, OA2) are not positioned on the same plane, a vertical error (r) of optical axis alignment may further increase according to an increase in a distance from the left-eye and right-eye cameras (A and B).

Even though a rig of a corresponding camera is adjusted to remove such vertical error (r), it is very difficult to realize horizontal alignment of optical axes at a position at which the signboard (S) for alignment is not positioned due to an error of a rig itself of the left-eye and right-eye cameras (A and B).

Accordingly, even though an alignment state of optical axes is verified on the field using a plurality of signboards (S) disposed at predetermined intervals, it is a very inconvenient operation and a total amount of photographing time increases.

Accordingly, even though 3D image photographing needs to be performed by considering a retouching operation to a certain extent, even a minute vertical error (r) of optical axis alignment may cause fatigue to eyes and dizziness of audience based on a condition in which a 3D image is realized on a large screen, such as in a movie. Therefore, a high quality 3D image through optical axis alignment is significantly required even at a level of preventing visual discomfort to the audience.

### [Disclosure]

### [Technical Problem]

The present invention has been made in an effort to provide an optical axis alignment apparatus and an optical axis alignment method for three-dimensional (3D) image photographing that prevent an alignment error from occurring in optical axis alignment of left-eye and right-eye cameras in the case of 3D image photographing.

An object of the present invention provides an optical axis alignment apparatus and an optical axis alignment method for 3D image photographing that may secure a high quality 3D image and also decrease an amount of photographing time by enabling optical axis alignment of left-eye and right-eye cameras to be more easily and precisely performed.

An object of the present invention provides an optical axis alignment apparatus and an optical axis alignment method for 3D image photographing that automatically performs optical axis alignment of left-eye and right-eye cameras even without a user manually performing manipulation.

### [Technical Solution]

An exemplary embodiment of the present invention provides an optical axis alignment apparatus for image photographing, the apparatus including: a first reference portion formed with a first reference line and formed to be visible; a second reference portion separate from the first reference portion to face the first reference portion, and formed with a second reference line that is positioned on the same plane as the first reference line; and an alignment portion combined with the first reference portion and the second reference portion to assign a motion of the first reference portion and the second reference portion so that an optical axis of a one-way camera between a left-eye camera and a right-eye camera is positioned on the same plane constituted by the first reference line and the second reference line.

The first reference portion may have an open frame shape, and the first reference line may be formed using a wire that connects one side and the other side of the open frame.

The first reference portion may have an open frame shape, and the first reference line may be formed on a plate that is combined with the open frame, and has light transmissivity.

At least one first vertical reference line orthogonal to the first reference line may be formed on the plate. The second reference portion may have an open frame shape, and the second reference line may be formed on a plate that is combined with the open frame.

The plate may be formed as a mirror, and the second reference line may be formed as a reflected image of the first reference line that is reflected from the mirror.

At least one second vertical reference line orthogonal to the second reference line may be formed on the plate.

The plate may be formed as a mirror, and the second vertical reference line may be formed as a reflected image of the first vertical reference line that is reflected from the mirror.

The plate may be formed using a translucent material.
The optical axis alignment apparatus may further include a light source portion disposed at the rear of the second reference portion to irradiate light toward the first reference portion.

The light source portion may be formed using a light emitting diode (LED).

The optical axis alignment apparatus may further include a body portion integrally combining the first reference portion and the second reference portion, and combined with the alignment portion.

The alignment portion may be disposed in a multi-stage form in a lower portion of the first reference portion and the second reference portion, and may include: a left/right go-near stage enabling the first reference portion and the second reference portion to perform an arc motion in left and right directions; a forward/backward go-near stage enabling the first reference portion and the second reference portion to perform the arc motion in forward and backward directions; and a left/right stage enabling the first reference portion and second reference portion to perform a linear motion in left and right directions.

The optical axis alignment apparatus may further include an elevator moving the first reference portion and the second reference portion upward and downward.
The elevator may be disposed between the upward/downward go-near stage and the left/right stage.

The elevator may include: a boss portion including a handle portion capable of controlling a rotation; and a lead screw moving portion connected to an upper portion of the boss portion to perform a linear motion in upward and downward directions in interaction with the rotation of the handle portion.

The optical axis alignment apparatus may further include a rotator to rotate the first reference portion and the second reference portion.

The rotator may be disposed on the elevator.

The left/right go-near stage may be disposed on the upward/downward go-near stage.

The optical axis alignment apparatus may further include an alignment driving portion combined with the alignment portion to be power transferable to thereby provide driving power to the alignment portion so that alignment of a first horizontal line passing the optical axis of the one-way camera, the first reference line, and the second reference line is adjustable.

The alignment driving portion may provide the driving power to the alignment portion so that alignment of a first vertical line passing the optical axis of the one-way camera, any one of at least one first vertical reference line orthogonal to the first reference line, and any one of at least one second vertical reference line orthogonal to the second reference line is adjustable.

The optical axis alignment apparatus may further include: an alignment controlling portion to receive image data of the first reference line and the second reference line through the one-way camera, to extract a horizontal alignment error of the first reference line and the second reference line with respect to a first horizontal line, and to generate a horizontal alignment driving signal for compensating for the horizontal alignment error; and an alignment driving portion combined with the alignment portion to be power transferable, to receive the horizontal alignment driving signal, and to provide driving power to the alignment portion to align the first horizontal line, the first reference line, and the second reference line.

The horizontal alignment error may include a gradient between the first horizontal line and the first reference line or the second reference line, a distance between the first reference line and the second reference line, and a distance between the horizontally aligned first reference line and second reference and the first horizontal line.

The alignment controlling portion may receive image data of at least one first vertical reference line orthogonal to the first reference line and at least one second vertical reference line orthogonal to the second reference line through the one-way camera, extract a vertical alignment error of the predetermined first vertical reference line and the predetermined second vertical reference line with respect to a first vertical line passing the optical axis of the one-way camera, and generate a vertical alignment driving signal for compensating for the vertical alignment error. The alignment driving portion may receive the vertical alignment driving signal and provide driving power to the alignment portion to align the first vertical line, the predetermined first vertical reference line, and the predetermined second vertical reference line.

The predetermined first vertical reference line may be a first vertical reference line closest to the first vertical line among the at least one first vertical reference line. The predetermined second vertical reference line may be a second vertical reference line closest to the first vertical line among the at least one second vertical reference line.

The vertical alignment error may include a distance between the first vertical reference line and the second vertical reference line and a distance between the vertically aligned first vertical reference line and second vertical reference line and the first vertical line.

The alignment driving portion may include: a left/right gradient alignment driving portion to provide driving power for enabling the first reference portion and the second reference portion to perform an arc motion in left and right directions; a forward/backward gradient alignment driving portion to provide driving power for enabling the first reference portion and the second reference portion to perform an arc motion in forward and backward directions; and an upward/downward alignment driving portion to provide driving power for enabling the first reference portion and the second reference portion to perform a linear motion in upward and downward directions. The left/right gradient alignment driving portion, the forward/backward gradient alignment driving portion, and the upward/downward alignment driving portion may be disposed in a multi-stage form.

The alignment driving portion may further include a left/right alignment driving portion to provide driving power for enabling the first reference portion and the second reference portion to perform a linear motion in left and right directions. The left/right gradient alignment driving portion, the forward/backward gradient alignment driving portion, the upward/downward alignment driving portion, and the left/right alignment driving portion may be disposed in a multi-stage form.

The alignment driving portion may further include a rotation driving portion to provide driving power for rotating the first reference portion and the second reference portion. The left/right gradient alignment driving portion, the forward/backward gradient alignment driving portion, the upward/downward alignment driving portion, the left/right alignment driving portion, and the rotation driving portion may be disposed in a multi-stage form.

The alignment controlling portion may receive image data of the horizontally aligned first reference line and second reference line through the other-way camera between left-eye and right-eye cameras, extract a horizontal alignment error of the horizontally aligned first reference line and second reference line with respect to a second horizontal line passing an optical axis of the other-way camera, generate a horizontal alignment rig driving signal for compensating for the horizontal alignment error, and transmit the horizontal alignment rig driving signal to a rig controlling portion for controlling a motion of a rig of the other-way camera.

The horizontal alignment error may include a gradient between the second horizontal line and the horizontally aligned first reference line and second reference line, and a distance between the second horizontal line and the horizontally aligned first reference line and second reference line.

The rig controlling portion may receive the horizontal alignment rig driving signal and control the motion of the rig of the other-way camera to horizontally align the second horizontal line, and the horizontally aligned first reference line and second reference line.

The alignment controlling portion may receive image data of the predetermined first vertical reference line and the predetermined second vertical reference line through the other-way camera between the left-eye camera and the right-eye camera, generate a vertical alignment rig driving signal for feedback-controlling the predetermined first vertical reference line, the predetermined second vertical reference line, and a second vertical line passing an optical axis of the other-way camera to be vertically aligned, and transmit the vertical alignment rig driving signal to a rig controlling portion for controlling a motion of a rig of the other-way camera.

The rig controlling portion may receive the vertical alignment rig driving signal, and control the motion of the rig of the other-way camera to align the second vertical line passing the optical axis of the other-way camera, and the vertically aligned predetermined first vertical reference line and predetermined second vertical reference line.

Another exemplary embodiment of the present invention provides an optical axis alignment method using an optical axis alignment apparatus for three-dimensional (3D) photographing , the method including: a) receiving image data of a first reference line and a second reference line, at least one first vertical reference line, and at least one second vertical reference line orthogonal to the first reference line and the second reference line, respectively, through a one-way camera between left-eye and right-eye cameras; b) performing alignment of a first horizontal line passing an optical axis of the one-way camera, the first reference line, and the second reference line based on the received image data of the first reference line and the second reference line; c) performing alignment of a first vertical line passing the optical axis of the one-way camera, the predetermined first vertical reference line, and the predetermined second vertical reference line based on the received image data of at least one first vertical reference line and at least one second vertical reference line; d) receiving image data of the first reference line and the second reference line aligned in the b) and image data of the at least one first vertical reference line and at least one second vertical reference line aligned in the c), through the other-way camera between the left-eye and right-eye cameras; e) performing alignment of a second horizontal line passing an optical axis of the other-way camera, and the predetermined first reference line and the predetermined second reference line received in the d), based on the image data of the first reference line and the second reference line received in the d); and f) performing alignment of a second vertical line passing the optical axis of the other-way camera, and the predetermined first vertical reference line and the predetermined second vertical reference line received in the d), based on the image data of the first vertical reference line and the second vertical reference line received in the d).

The b) may include: b-1) displaying the first reference line and the second reference line on a screen of the first horizontal line; and b-2) driving an alignment portion to horizontally align the displayed first horizontal line, the first reference line, and the second reference line.

The b) may include: b-3) extracting a gradient between the first horizontal line and the first reference line or the second reference line, and a distance between the first reference line and the second reference line; b-4) driving an alignment portion to horizontally align the first reference line and the second reference line by compensating for the gradient and compensating for the distance between the first reference line and the second reference line; b-5) extracting a distance between the first reference line and the second reference line horizontally aligned in the b-4), and the first horizontal line; and b-6) driving the alignment portion to horizontally align the first horizontal line and the horizontally aligned first reference line and second reference line by compensating for the distance extracted in the b-5) .

The c) may include: c-1) displaying the first vertical reference line and the second vertical reference line on a screen of the first vertical line; and c-2) driving an alignment portion to vertically align the displayed first vertical line, the first vertical reference line, and the second vertical reference line.

The c) may include: c-3) extracting a distance between the first vertical reference line and the second vertical reference line; c-4) driving an alignment portion to vertically align the first vertical reference line and the second vertical reference line by compensating for the distance extracted in the c-3); c-5) extracting a distance between the first vertical reference line and the second vertical reference line vertically aligned in the c-4) and the first vertical line; and c-6) driving an alignment portion to vertically align the first vertical line and the vertically aligned first vertical reference line and second vertical reference line by compensating for the distance extracted in the c-5).

The e) may include: e-1) displaying the first reference line and the second reference line horizontally aligned in the c), on a screen of the second horizontal line; and e-2) driving a rig of the other-way camera to horizontally align the displayed second horizontal line, the first reference line, and the second reference line.

The e) may include: e-3) extracting a gradient between the second horizontal line and the first reference line or the second reference line and a distance between the first reference line and the second reference line; e-4) driving a rig of the other-way camera to horizontally align the first reference line and the second reference by compensating for the gradient and compensating for the distance between the first reference line and the second reference line; e-5) extracting a distance between the first reference line and the second reference line horizontally aligned in the e-4) and the second horizontal line; and e-6) driving a rig of the other-way camera to horizontally align the second horizontal line and the horizontally aligned first reference line and second reference line by compensating for the distance extracted in e-5).

The f) may include: f-1) displaying the predetermined first vertical reference line and the predetermined second vertical reference line received in the d), on a screen of the second vertical line; and f-2) driving a rig of the other-way camera to align the displayed first vertical reference line and second vertical reference line, and the second vertical line.

The f) may feedback-control a rig of the other-way camera to vertically align the second vertical line, the first vertical reference line, and the second vertical reference line.

### [Advantageous Effects]

An optical axis alignment apparatus and an optical axis alignment method for 3D image photographing according to exemplary embodiments of the present invention may fundamentally remove a vertical error that occurs when performing optical axis alignment using a signboard by providing a plane constituted by a first reference line and a second reference line as reference of optical axis alignment and thereby may obtain a high quality 3D image.

By removing the inconvenience of an alignment operation using a plurality of signboards in order to verify a horizontal alignment state for each photographing, it is possible to significantly reduce an amount of photographing time.

When considering a 3D image photographing environment in which a camera rig not standardized needs to be used, it is possible to readily and exactly perform optical axis alignment of left-eye and right-eye cameras while using the respective camera rigs.

An optical axis alignment apparatus and an optical axis alignment method for 3D image photographing according to exemplary embodiments of the present invention may readily perform optical axis alignment of left-eye and right-eye cameras by configuring optical axes of the left-eye and right-eye cameras to be automatically aligned without a user manually performing manipulation, through an alignment controlling portion and an alignment driving portion, and may also significantly decrease a total amount of photographing time by quickly performing optical axis alignment.

It is possible to precisely perform optical axis alignment of left-eye and right-eye cameras by extracting an alignment error of the optical axes with a first reference line and a second reference line using eyes of a user and numerical values thereof, and by performing optical axis alignment based on the extracted alignment error.

An optical axis alignment apparatus and an optical axis alignment method for 3D image photographing according to exemplary embodiments of the present invention may function as a standard means for providing reference to develop a camera rig for 3D image photographing.

### [Description of Drawings]

FIG. 1 is a schematic front view illustrating a state in which optical axes of left-eye and right-eye cameras configured for three-dimensional (3D) image photographing are horizontally aligned.
FIG. 2 is a conceptual diagram to describe an error that occurs when optical axes of left-eye and right-eye cameras are not horizontally aligned in the case of 3D image photographing.
FIG. 3 is a front view to describe a configuration of an optical axis alignment apparatus for 3D image photographing according to an exemplary embodiment of the present invention.
FIG. 4 is a side view to describe a configuration of a first reference portion and a second reference portion combined with a body portion of FIG. 3.
FIG. 5 is a view to describe a horizontal line and a vertical line passing an optical axis of a camera.
FIG. 6 is a front view to describe the first reference portion of FIG. 3.
FIG. 7 is a side view to describe the first reference portion of FIG. 3.
FIG. 8 is a front view illustrating a plate combined with the first reference portion, and including a first reference line and a first vertical reference line.
FIG. 9 is a front view to describe the second reference portion of FIG. 3.
FIG. 10 is a front view illustrating a plate inserted into the second reference portion of FIG. 9 and including a second reference line.
FIG. 11 is a front view illustrating a shape of the body portion of FIG. 3.
FIG. 12 is a side view illustrating the shape of the body portion of FIG. 3.
FIG. 13 is a configuration diagram to describe an alignment driving portion of an optical axis alignment apparatus for 3D image photographing according to an exemplary embodiment of the present invention.
FIGS. 14A and 14B are views illustrating a view finder of a camera displaying a first horizontal line, the first reference line, and the second reference line before horizontal alignment.
FIGS. 15A and 15B are views illustrating a view finder of a camera displaying the first reference line and the second reference line in which a gradient is compensated for in a state of FIGS. 14A and 14B.
FIGS. 16A and 16B are views illustrating a view finder of a camera displaying another state of the first reference line and the second reference line in which a gradient is compensated for in the state of FIGS. 14A and 14B.
FIGS. 17A and 17B, and FIGS. 18A and 18B are views illustrating a view finder of a camera displaying a distance level between the first reference line and the second reference line based on a driving direction of a forward/backward gradient alignment driving portion.
FIGS. 19A and 19B are views illustrating a view finder of a camera displaying a state in which the first reference line and the second reference line are aligned in a state of FIGS. 15A and 15B or FIGS. 16A and 16B.
FIGS. 20A and 20B are views illustrating a view finder of a camera displaying a state in which the first horizontal line, the first reference line, and the second reference line are horizontally aligned in a state of FIGS. 19A and 19B .
FIG. 21 is a conceptual diagram to describe a state in which optical axes are aligned using an optical axis alignment apparatus for 3D image photographing according to an exemplary embodiment of the present invention in a parallel-axis camera alignment scheme.
FIG. 22 is a conceptual diagram to describe a state in which optical axes are aligned using an optical axis alignment apparatus for 3D image photographing according to an exemplary embodiment of the present invention in an orthogonal camera alignment scheme.
FIGS. 23A and 23B are views illustrating a view finder of a camera displaying the first vertical line, the first vertical reference line, and the second vertical reference line before vertical alignment.
FIGS. 24A and 24B are views illustrating a view finder of a camera displaying a state in which the first vertical reference line and the second vertical reference line are horizontally aligned in a state of FIGS. 23A and 23B.
FIG. 25 is a view illustrating a view finder of a camera displaying a state in which the first horizontal line, the first reference line, and the second reference line are vertically aligned in a state of FIGS. 24A and 23B .
FIG. 26 is a view illustrating a view finder of a camera displaying a second horizontal line of the other-way camera before horizontal alignment, an optical axis of a one-way camera, and the horizontally aligned first reference line and second reference line.
FIG. 27 is a view illustrating a view finder of a camera displaying the first reference line and the second reference line in which a gradient is compensated for in a state of FIG. 26.
FIG. 28 is a view illustrating a view finder of a camera displaying a state in which the first reference line and the second reference line are aligned in a state of FIG. 27.
FIG. 29 is a view illustrating a view finder of a camera displaying a state in which the second horizontal line, the first reference line, and the second reference line are horizontally aligned in a state of FIG. 28.
FIG. 30A is a view illustrating a view finder of a camera displaying the second vertical line, the first vertical reference line, and the second vertical reference line before vertical alignment, and FIG. 30B is a view to describe an alignment error of the other-way camera with the first vertical reference line and the second vertical reference line in a parallel-axis camera alignment scheme.
FIG. 31A is a view illustrating a view finder of a camera displaying the second vertical line, the first vertical reference line, and the second vertical reference line after vertical alignment, and FIG. 31B is a view to describe vertical alignment of the first vertical reference line and the second vertical reference line with respect to the optical axis of the other-way camera in a parallel-axis camera alignment scheme.
FIG. 32 is a flowchart to describe an optical axis alignment method for 3D image photographing according to the present invention.
FIG. 33 is a flowchart to describe a process of manually performing horizontal alignment in operation S200 of FIG. 32.
FIG. 34 is a flowchart to describe a process of automatically performing horizontal alignment in operation S200 of FIG. 32.
FIG. 35 is a flowchart to describe a process of manually performing vertical alignment in operation S300 of FIG. 32.
FIG. 36 is a flowchart to describe a process of automatically performing vertical alignment in operation S300 of FIG. 32.
FIG. 37 is a flowchart to describe a process of manually performing horizontal alignment in operation S500 of FIG. 32.
FIG. 38 is a flowchart to describe a process of automatically performing horizontal alignment in operation S500 of FIG. 32.
FIG. 39 is a flowchart to describe a process of manually performing vertical alignment in operation S600 of FIG. 32.

### [Best Mode]

Hereinafter, an optical axis alignment apparatus for three-dimensional (3D) image photographing according to exemplary embodiments of the present invention will be described.

Advantages and features of the present invention and a method for achieving the same will be clearly understood with reference to exemplary embodiments that are described in detail below together with the accompanying drawings.

However, the present invention is not limited to the exemplary embodiments and may be embodied in a variety of different forms. Here, the exemplary embodiments are provided to complement the disclosure of the present invention and to completely inform those skilled in the art about the scope of the invention. The present invention is defined by the scope of the claims.

When it is determined that the detailed description related to a related known function or configuration may make the purpose of the present invention unnecessarily ambiguous in describing the present invention, the detailed description will be omitted here.

An optical axis alignment apparatus for 3D image photographing according to the present invention is to prevent the aforementioned error occurring in optical axis alignment and thus, may refer to an optical axis alignment apparatus that performs an operation of fitting optical axes of left-eye and right-eye cameras for a subject by horizontally aligning optical the optical axes of the left-eye and right-eye cameras and then vertically aligning the axes of the left-eye and right-eye cameras in a state in which the optical axes of the left-eye and right-eye cameras are horizontally aligned.

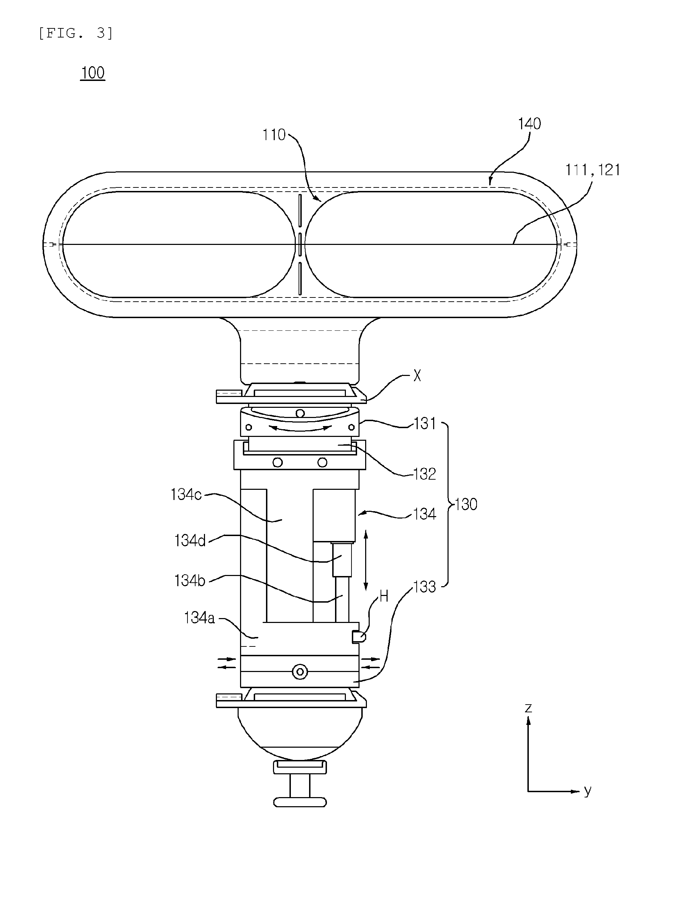

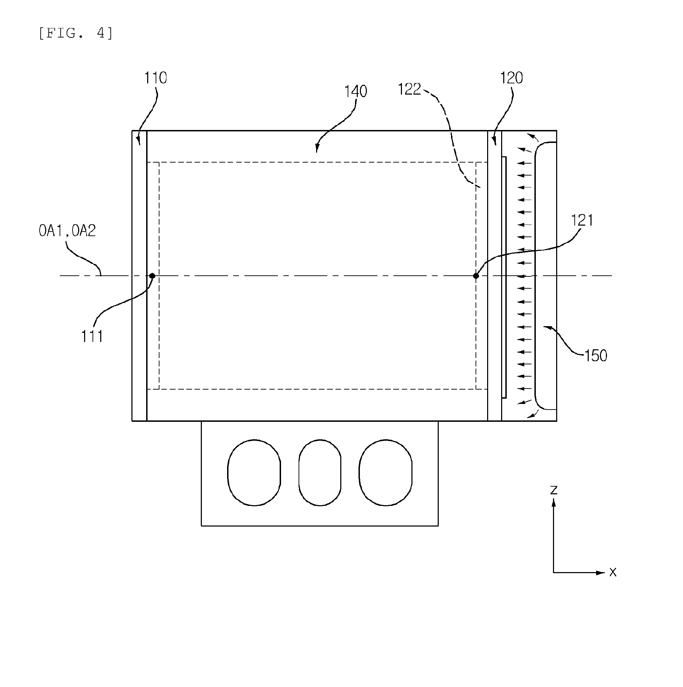

FIG. 3 is a front view to describe a configuration of an optical axis alignment apparatus for 3D image photographing according to an exemplary embodiment of the present invention, and FIG. 4 is a side view to describe a configuration of a first reference portion and a second reference portion combined with a body portion of FIG. 3.

The above drawings are illustrated to conceptually clearly understand a configuration relationship about the exemplary embodiment of the present invention. Accordingly, as a result, the drawings may be variously modified and may not be significantly limited to a predetermined form illustrated in the drawings.

Referring to FIGS. 3 and 4, a body 100 of the optical axis alignment apparatus for 3D image photographing according to an exemplary embodiment includes first reference portions 110 disposed to be separate from each other in front of left-eye and right-eye cameras, and second reference portions 120 formed to face the first reference portions 110, respectively, and to be separate from each other, and an alignment portion 130 combined with lower portions of the first reference portion 110 and the second reference portion 120 to assign a motion to the first reference portion 110 and the second reference portion 120.

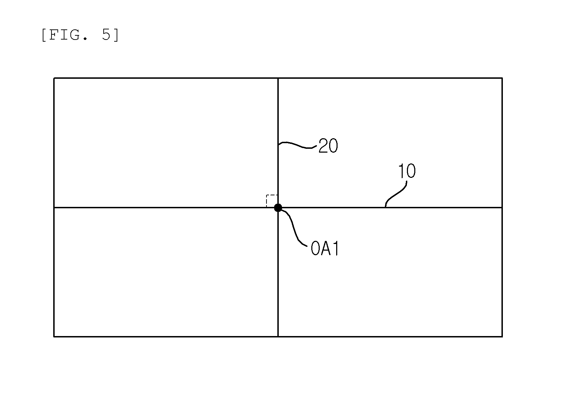

Prior to describing constituent elements of the exemplary embodiment, a vertical line and a horizontal line passing an optical axis of a camera will be briefly described with reference to FIG. 5 to help understanding of a horizontal alignment process of the optical axis.

FIG. 5 is a view to describe a horizontal line and a vertical line passing an optical axis of a camera.

"10" of FIG. 5 indicates a horizontal line (hereinafter, referred to as a first horizontal line) passing an optical axis (OA1) of a camera (hereinafter, referred to as a reference camera) that is used as reference for optical axis alignment between left-eye and right-eye cameras, and "20" of FIG. 5 indicates a vertical line (hereinafter, referred to as a first vertical line) passing the optical axis (OA1) of the reference camera. The first horizontal line 10 and the first vertical line 20 are displayed on a view finder of the reference camera or a screen for monitoring the view finder and thus, are elements that are used as reference for optical axis alignment.

The reference camera is initially fixed toward a subject and thus, the first horizontal line 10 and the first vertical line 20 may be positioned based on the subject.

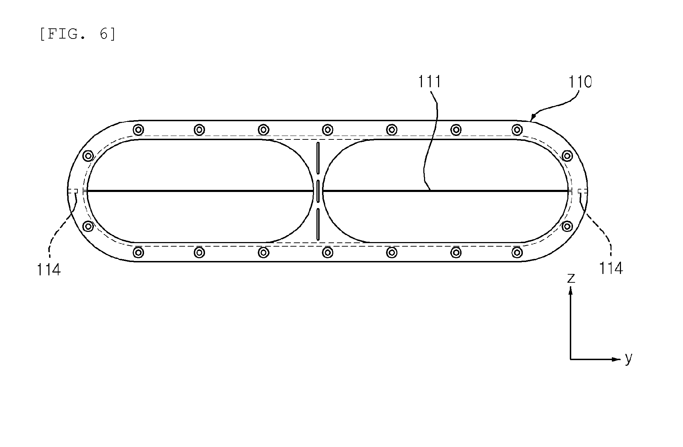

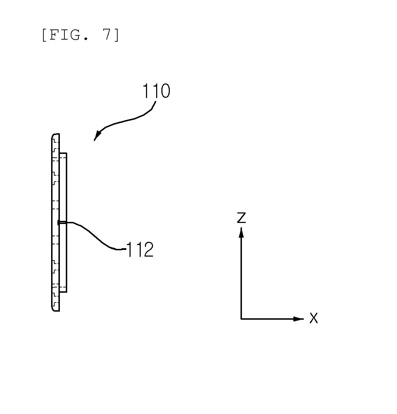

FIG. 6 is a front view to describe the first reference portion of FIG. 3, and FIG. 7 is a side view to describe the first reference portion of FIG. 3.

Initially, the first reference portion 110 will be described.

The first reference portion 110 is a constituent element to provide basic alignment reference for optical axis alignment of the reference camera.

Even though FIG. 6 illustrates the exemplary embodiment in which an external appearance of the first reference portion 110 has an open frame shape and a side surface thereof has a rounding-processed rectangular structure, it is only an example and thus, the present invention is not limited thereto. Accordingly, the external appearance of the first reference portion 110 may have a closed plate shape or a bar shape.

However, when considering alignment of a first reference line 111, which will be described below, and the optical axis of the reference camera, it may be desirable for convenience that the first reference portion 110 has a rectangular structure with a horizontally long length.

The external appearance of the first reference portion 110 having the open frame shape is proposed so that a second reference line 121, which will be described below, may be visible at a view finder of each of the left-eye and right-eye cameras.

When the first reference portion 110 is provided in a closed plate shape or bar shape, the first reference portion 110 may be formed of a transparent material so that the second reference line 121 disposed to face the corresponding first reference portion 110 may be visible.

A plurality of bolt holes for being combined with the body portion 140, which will be described below, may be formed on the outside of the first reference portion 110.

Meanwhile, the first reference portion 110 includes the first reference line 111 to be parallel with a center portion.

Here, the first reference line 111 refers to a straight line formed within the first reference portion 110 and to a line that is used as reference to be aligned with the first horizontal line (10 of FIG. 5) of the reference camera. In the exemplary embodiment, the first reference line 111 may be formed using a wire that connects both left and right sides of the first reference portion 110. The wire may use a high carbon steel wire such as a piano wire. This is because the first reference line 111 requires high straightness and durability.

For visibility, the wire may be manufactured to have a bright color, and on the other hand, the first reference portion 110 may be manufactured to have a dark color.

As illustrated in FIGS. 6 and 7, the wire is fixably mounted to wire fixing portions 114 provided on both sides of the first reference portion 110.

Even though the present exemplary embodiment proposes the external appearance of the first reference portion having the open frame shape and the first reference line using a wire, it is only an example and thus, the present invention may be embodied through a variety of exemplary embodiments in which a plate displaying the first reference line and having light transmissivity may be combined with a predetermined shape frame of the first reference portion and the first reference line is formed on the first reference portion itself. Accordingly, entire or partial modification may be applied to the first reference portion.

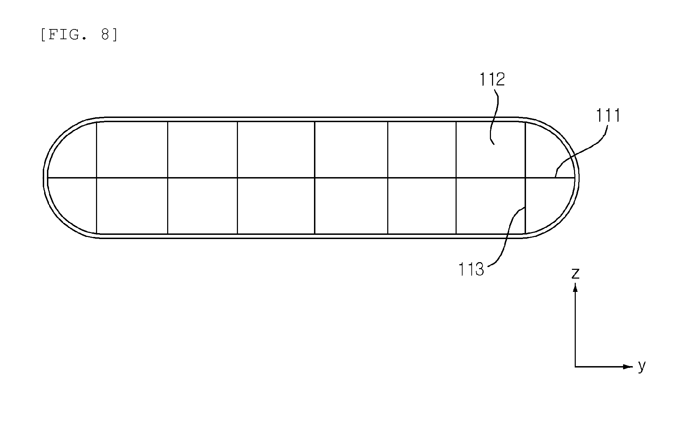

FIG. 8 is a front view illustrating a plate combined with the first reference portion and including the first reference line and a first vertical reference line.

As illustrated in FIG. 8, according to another exemplary embodiment, the first reference line 111 may be formed on a plate 112. Here, the plate 112 may be formed using a transparent material so that the second reference line 121 of the second reference portion 120 disposed at the rear may be visible. Meanwhile, a plurality of first vertical reference lines 113 orthogonal to the first reference line 111 may be formed on the plate 112.

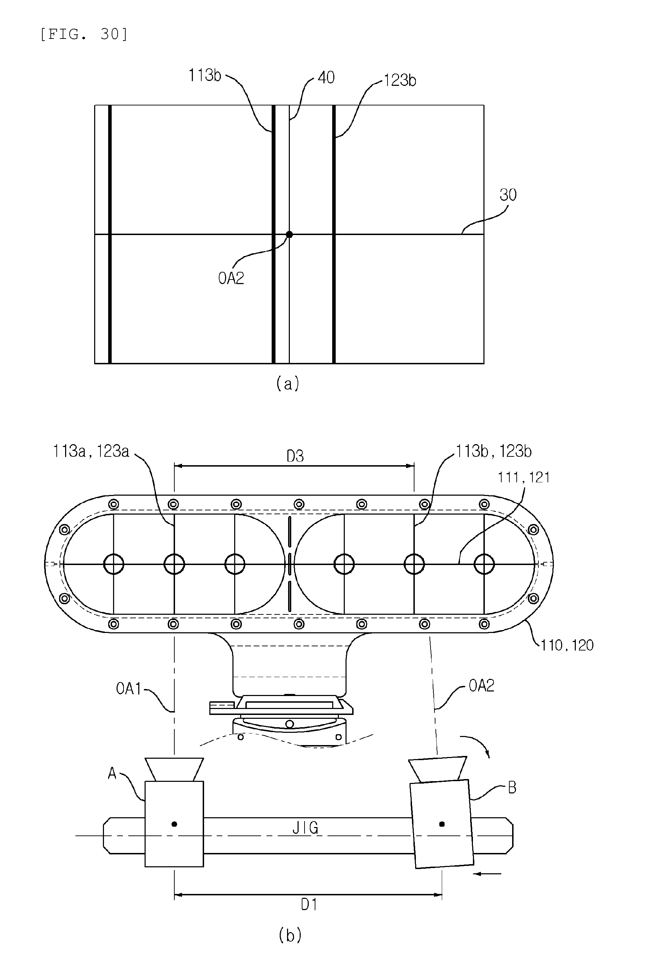

Here, the first vertical reference line 113 refers to a line that is used as reference to be aligned with the first vertical line (20 of FIG. 5) of the reference camera. In a parallel-axis camera alignment scheme, an interval of each first vertical reference line 113 is formed to correspond to a widthwise distance (D1 of FIG. 1 and FIG. 30) between the left-eye camera and the right-eye camera. According to an exemplary embodiment, the first vertical reference line 113 may be formed at an interval of 50 mm or 100 mm. It will be further described in detail with reference to the following vertical alignment process. That the first reference line 111 configured as above and the first horizontal line 10 of the reference camera are aligned is the first requirement of horizontal alignment with respect to the optical axes of the left-eye and right-eye cameras. That the first vertical reference line 113 and the first vertical line 20 of the reference camera are aligned is the first requirement of vertical alignment with respect to the optical axes of the left-eye and right-eye cameras.

The first reference portions 110 are disposed to be separate from each other in front of the left-eye and right-eye cameras.

Next, the second reference portion 120 will be described.

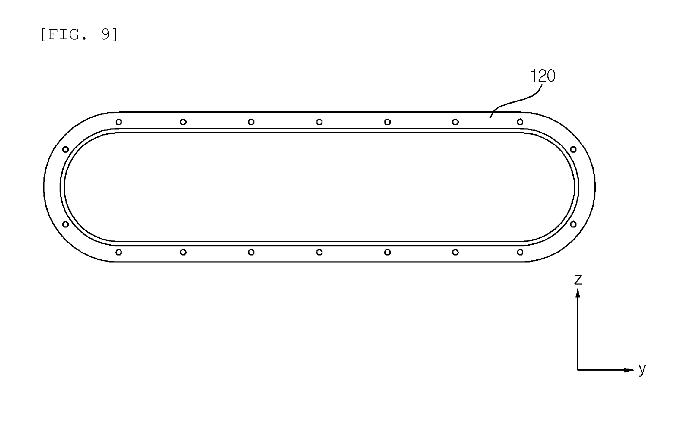

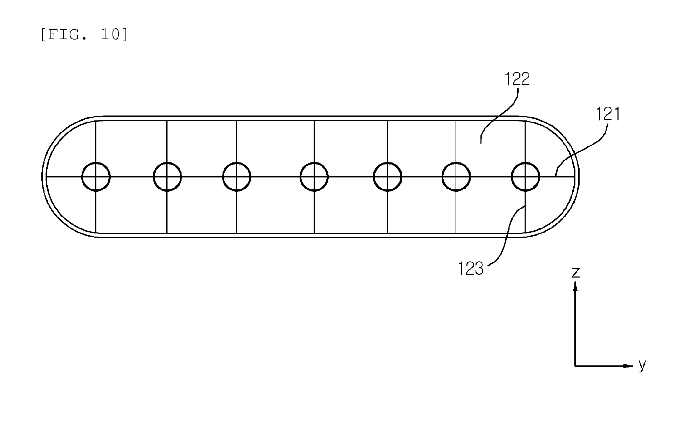

FIG. 9 is a front view to describe the second reference portion of FIG. 3, and FIG. 10 is a front view illustrating a plate inserted into the second reference portion of FIG. 9 and including the second reference line.

Together with the aforementioned first reference portion 110, the second reference portion 120 is a constituent element to provide reference for horizontal alignment and vertical alignment with respect to the optical axis of the reference camera. As illustrated in FIG. 10, the second reference line 121 is formed on the second reference portion 120. Here, the second reference line 121 and the first reference line 111 are formed on the same plane to provide a reference plane that is used as reference to align the first horizontal line 10 of the reference camera.

As illustrated in FIG. 9, the second reference portion 120 formed with the second reference line 120 has an open frame shape that is the same as the external appearance of the first reference portion 110. When considering that the first reference portion 110 and the second reference portion 120 are combined with each other through the body portion 140 in a barrel shape, which will be described below, the external appearance and size of the second reference portion 120 may be identical to the external appearance and size of the first reference portion 110 so that the first reference line 111 and the second reference line 121 may be positioned on the same plane.

The second reference portion 120 is disposed to face the first reference portion 110, and to be separate from the first reference portion 110. It indicates that arrangement is performed in an order of reference camera-first reference portion-second reference portion in front of the reference camera. Here, the second reference portion 120 may be combined and thereby be integrally formed with the first reference portion 110 by the body portion 140.

Meanwhile, as illustrated in FIG. 10, the second reference portion 120 may be configured to be inserted with a plate 122 in which the second reference line 121 horizontally formed on a center portion is displayed and a plurality of second vertical reference lines 123 orthogonal to the second reference line 121 is displayed. Here, the second vertical reference line 123 and the first vertical reference line 113 are formed on the same plane to provide a reference plane that is used as reference to align the first vertical line 20 of the reference camera.

Here, the plate 122 may be formed using a translucent material. This is because a light source portion 150, which will be described below, may be disposed at the rear of the plate 122 so that the second reference line 121 may be clearly visible from the view finder of the camera. Since the light source portion 150 irradiates light toward the camera, the plate 122 may be formed using a material having light transmissivity to some extents. An acryl material has high light transmissivity and is light and, on the other hand, has high strength. Accordingly, the acryl material is suitable for the material of the plate 122. Meanwhile, the plate 122 may be configured using a mirror, and the second reference line 121 may be formed as a reflected image of the first reference line 111 that is reflected from the plate 122. Here, the plate 122 needs to be disposed to be parallel with the plate 112 of the first reference portion 110 so that the second reference line 121 formed as the reflected image of the first reference line 111 and the first reference line 111 may be positioned on the same plane. Accordingly, in a state in which the first reference line 111 and the second reference line 121 have the same relative depth, a distance between the first reference portion 110 and the second reference portion 120 may be reduced to be a half.

Each of a plurality of second vertical reference lines 123 may also be formed as a reflected image of the first vertical reference line 113 that is reflected from the plate 122.

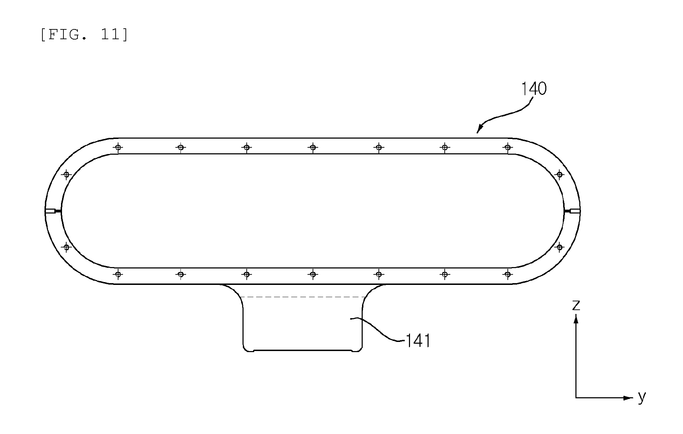

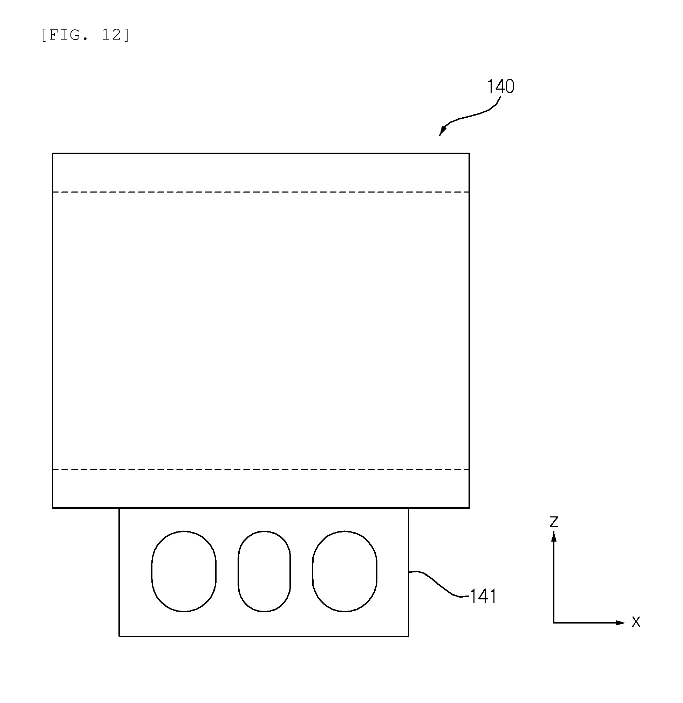

FIG. 11 is a front view illustrating a shape of the body portion of FIG. 3, and FIG. 12 is a side view illustrating the shape of the body portion of FIG. 3.

The body portion 140 functions as a housing for combining and thereby integrally forming the first reference portion 110 and the second reference portion 120. Here, the body portion 140 needs to fix the first reference portion 110 and the second reference portion 120, respectively, so that the first reference line 111 and the second reference line 121 may be positioned on the same plane.

The body portion 140 has a barrel shape of which inside is empty and of which front and rear sides are open. The body portion 140 has a rectangular appearance in correspondence to the appearance of the first reference portion 110 and the second reference portion 120. A bolt hole or a groove for combination may be formed on an open surface of front/rear side so that the first reference portion 110 and the second reference portion 120 may be combined with each other.

As described above, the first reference portion 110 and the second reference portion 120 may be formed to have the same appearance and size, and in correspondence thereto, the first reference line 111 and the second reference line 121 may also be formed to have the same position, length, and thickness.

When the first reference portion 110 and the second reference portion 120 are combined with the body portion 140, the first reference line 111 and the second reference line 121 are naturally formed to be placed on the same plane. To this end, the first reference portion 110, the second reference portion 120, and the body portion 140 may be integrally molded and thereby be manufactured. Meanwhile, a combining bracket 141 for combination with the alignment portion 130, which will be described below, is formed in a lower portion of the body portion 140. A hole for combination may be punctured and thereby be formed in the combining bracket 141.

As illustrated in FIG. 4, the light source portion 150 for irradiating light toward a camera may be disposed at the rear of the second reference portion 120. The light source portion 150 functions to irradiate light so that the first reference line 111 and the second reference line 121 may be well visible from a view finder of the camera or an apparatus for monitoring the view finder of the camera.

When a 3D image shooting place is dark, it is not easy to identify the first reference line 111 and the second reference line 121 from the view finder. Accordingly, by installing a separate light source, it is possible to align the optical axes regardless of a lighting environment. The light source portion 150 may be attached to the rear of the body portion 140 through a separate combining member, or may also be directly attached to the second reference portion 120.

The light source portion 150 may be configured as a light emitting diode (LED) assembly of various shapes such as a circular shape, a planar shape, and the like, corresponding to the appearance of the body portion 140.

Next, the alignment portion 130 will be described. The alignment portion 130 is a constituent element to assign, to the first reference portion 110 and the second reference portion 120, motion into forward/backward, left/right, upward/downward, and rotation directions, so that the optical axis of the reference camera may be positioned on the same plane constituted by the first reference line 111 and the second reference line 121. The alignment portion 130 is formed by disposing configurations for assigning motions into the respective directions in a multi-stage form, and has a configuration in which a constituent element disposed on the top and the combining bracket 141 of the body portion 140 are combined with each other.

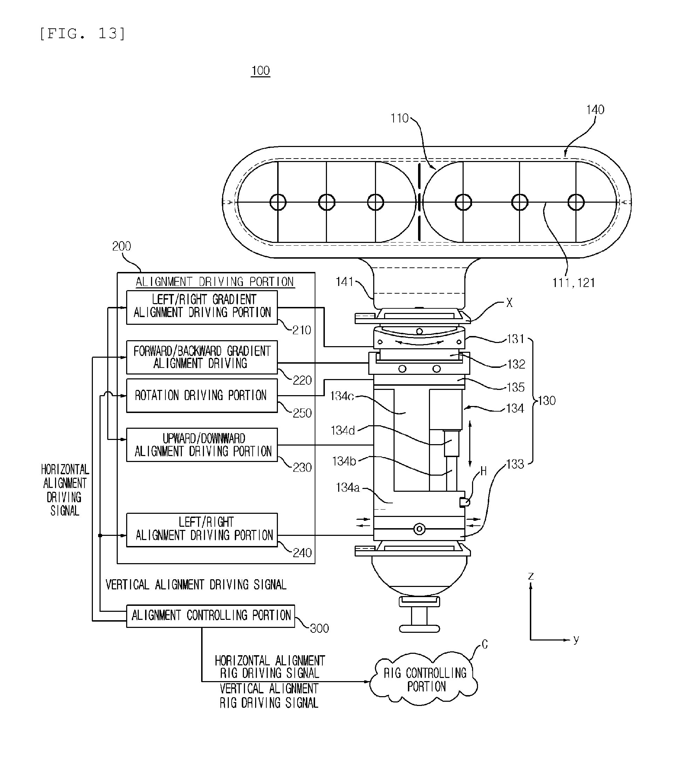

It will be further described in detail with reference to FIGS. 3 and 13.

A connector (x) is combined with the combining bracket 141 of the body portion 140. The connector (x) is formed using a dovetail scheme of easily performing attachment and detachment. The alignment portion 130 is combined with the connector (x).

The alignment portion 130 of FIG. 3 is formed by disposing a first go-near stage 131, a second go-near stage 132, a Y stage 133, an elevator 134, and a rotator 135 in a multi-stage form.

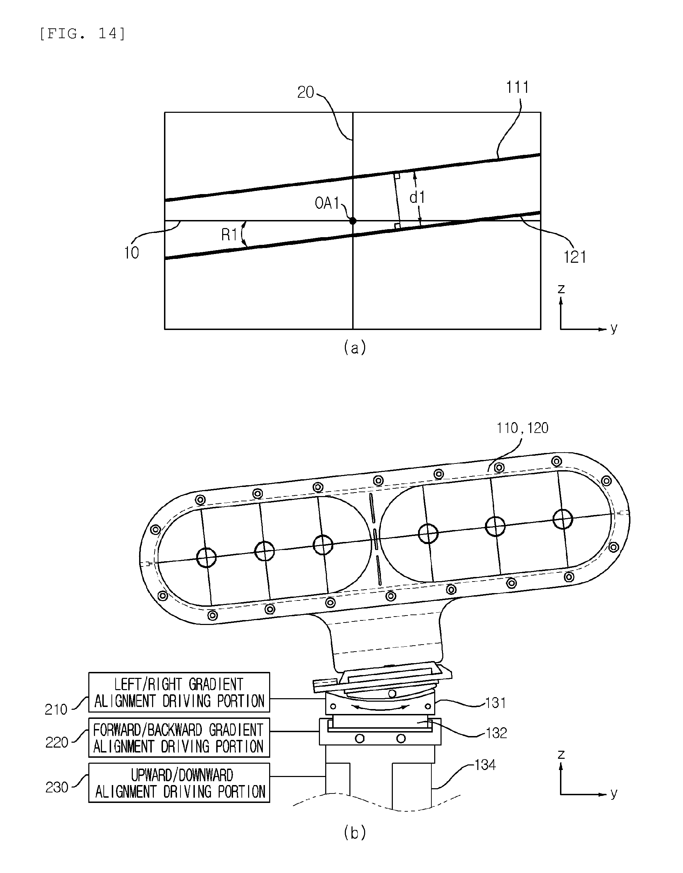

The first go-near stage 131 is disposed right below the combining bracket 141 and functions to enable the body portion 140 to perform an arc motion in left and right directions (on the Z-Y plane). The first go-near stage 131 moves along the curved surface to thereby compensate for a gradient (R1 of FIG. 14) on the Z-Y plane constituted by the first reference line 111 and the second reference line 121 with respect to the first horizontal line 10 of the reference camera.

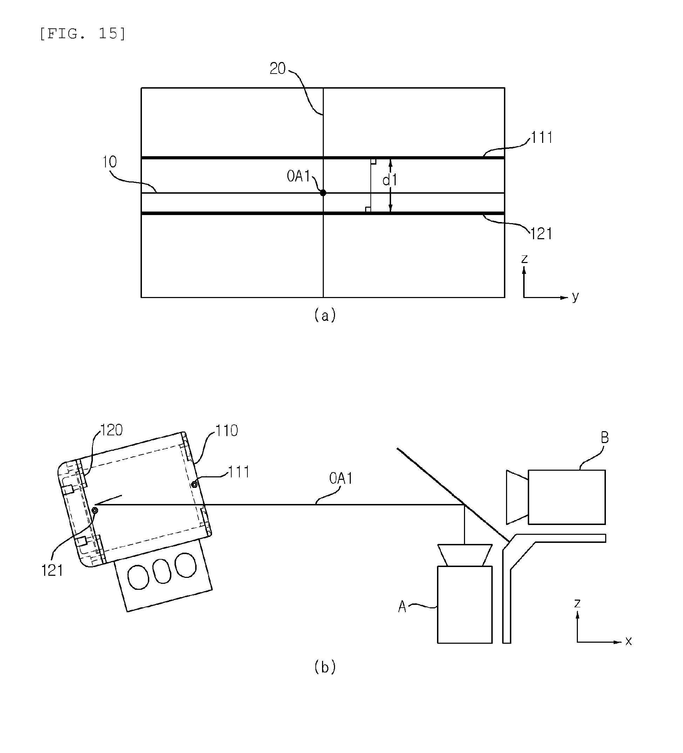

The second go-near stage 132 is disposed below the first go-near stage 131 and functions to enable the body portion 140 to perform an arc motion in forward and backward directions (on the Z-X plane). The second go-near stage 131 also moves along the curved surface to thereby compensate for a distance (d1 of FIG. 15) between the first reference line 111 and the second reference line 121.

Even though FIG. 3 illustrates that the first go-near stage 131 is disposed on the second go-near stage 132, the present invention is not limited thereto. Accordingly, the second go-near stage 132 may be disposed on the first go-near stage 131 depending on an optical axis alignment environment.

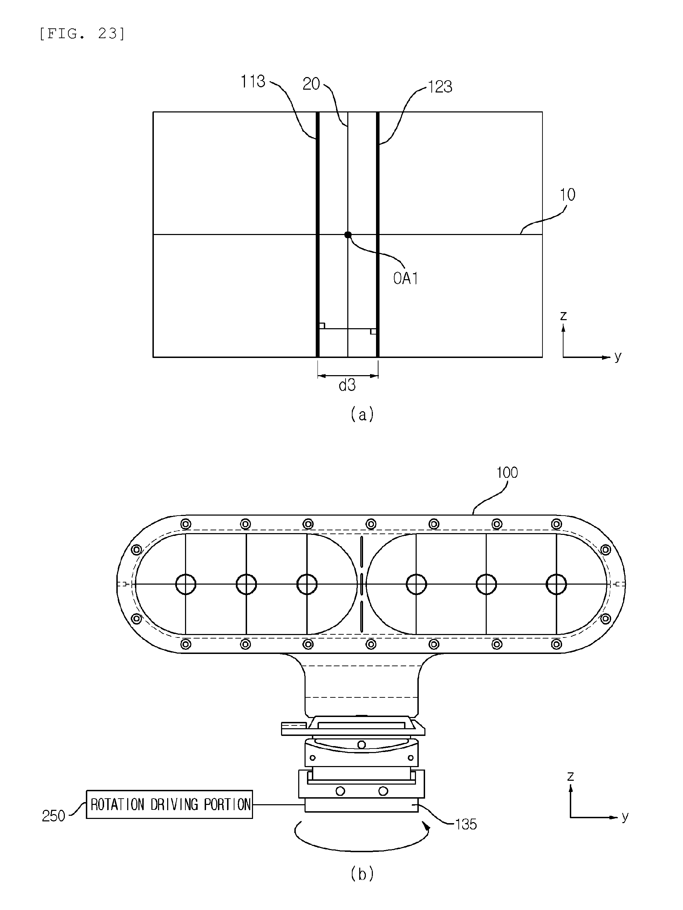

The rotator 135 is disposed below the second go-near stage 132. The rotator 135 functions to rotate the body portion 140 on the X-Y plane. The rotator 135 rotates the body portion 140 by employing an axial center of the body portion 140 as a rotation center to thereby compensate for a distance (d3 of FIG. 23) between a predetermined first vertical reference line 113 and a predetermined second vertical reference line 123.

The elevator 134 is disposed below the rotator 135. Accordingly, the elevator 134 is configured to be disposed between the rotator 135 and the Y stage 133, which will be described below. However, the present invention is not limited thereto and thus, the elevator 134 may be disposed at various positions based on the optical axis alignment environment.

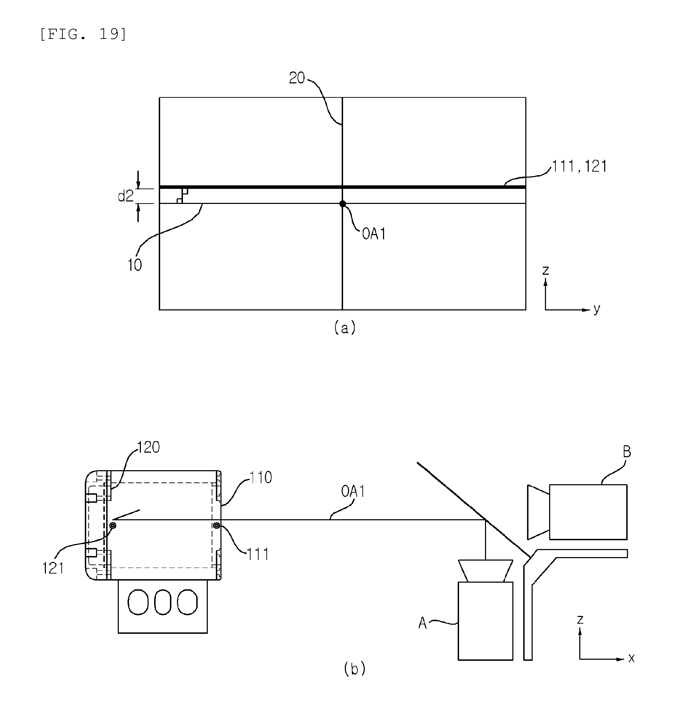

The elevator 134 enables the body portion 140 to perform a linear motion in upward and downward directions to thereby compensate for a distance (d2 of FIG. 19) between the first horizontal line 10 of the reference camera and the horizontally aligned first reference line 111 and second reference line 121.

As illustrated in FIG. 3, the elevator 134 includes a boss portion 134a including a handle portion (H) capable of controlling a rotation, and a lead screw moving portion connected to an upper portion of the boss portion 134a to perform a linear motion in upward and downward directions in interaction with the rotation of the handle portion (H).

The lead screw moving portion is a constituent element to perform a linear motion in upward and downward directions according to rotation control of the handle portion (H), and includes a lead screw 134b connected to the handle portion (H), an elevating frame 134c combined with the boss portion 134a to be slidable upward and downward, and a moving block 134d to perform a linear motion in upward and downward directions according to the rotation control of the handle portion (H).

The lead screw 134b is a member that has a circular cylindrical shape having a hollow inside and is uniformly formed with a predetermined screw thread in a lengthwise direction along the periphery of the member.

The handle portion (H) is integrally formed with the lead screw 134b. Therefore, according to the rotation control of the corresponding handle portion (H), the lead screw 134b also rotates.

As illustrated in FIG. 3, the handle portion (H) is disposed to be freely rotatable within the boss portion 134a and a portion of the handle portion (H) is protruded from the side of the boss portion 134a so that an operator may easily control a rotation. Using a variety of exemplary embodiments, the shape of the handle portion (H) may be entirely or partially modified. The handle portion (H) may have a crown shape for slipperiness prevention, a polygonal shape (for example, a hexagonal shape or an octagonal shape) for easily exhibiting rotation power using a thumb and an index finger, a wheel shape including a rim, a spoke, and a boss, and the like. The peripheral surface of the handle portion (H) may be embo-processed using any one pattern of a comb pattern, a grid pattern, a dot pattern, a vertical stripe pattern, and other scratch patterns using surface roughness. Through the above surface processing, control convenience may be improved by providing a contact friction to a user.

The elevating frame 134c is combined with the boss portion 134a to be slidable upward and downward. When viewing from a side, the boss portion 134a is formed in an L shape in correspondence to the elevating frame 134c, and a plurality of rails (not shown) is formed on an inner vertical side wall of the boss portion 134a. A sliding block (not shown) slidably combined with a rail (not shown) is formed on the elevating frame 134c.

The moving block 134d is a member that is fixably mounted to the elevating frame 134c, and formed with a screw hole to be engaged with the screw thread formed on the lead screw 134b, therein. Due to an engaging relationship between the screw thread and the thread hole corresponding to the lead screw 134c, the moving block 134d moves the lead screw 134c, rotating in the same direction in interaction with forward and backward rotation of the handle portion (H), upward and downward.

When the lead screw 134c is moved upward and downward, the elevating frame 134c interacts and thereby slidably moves with the boss portion 134a upward and downward, thereby moving the body portion 140 upward and downward. Even though the elevator 134 according to the exemplary embodiment is described above, the present invention is not limited thereto. The elevator 134 of FIG. 3 is any one form of a mechanical means for moving the body portion 140 upward and downward and thus, various modified exemplary embodiments may be applied thereto.

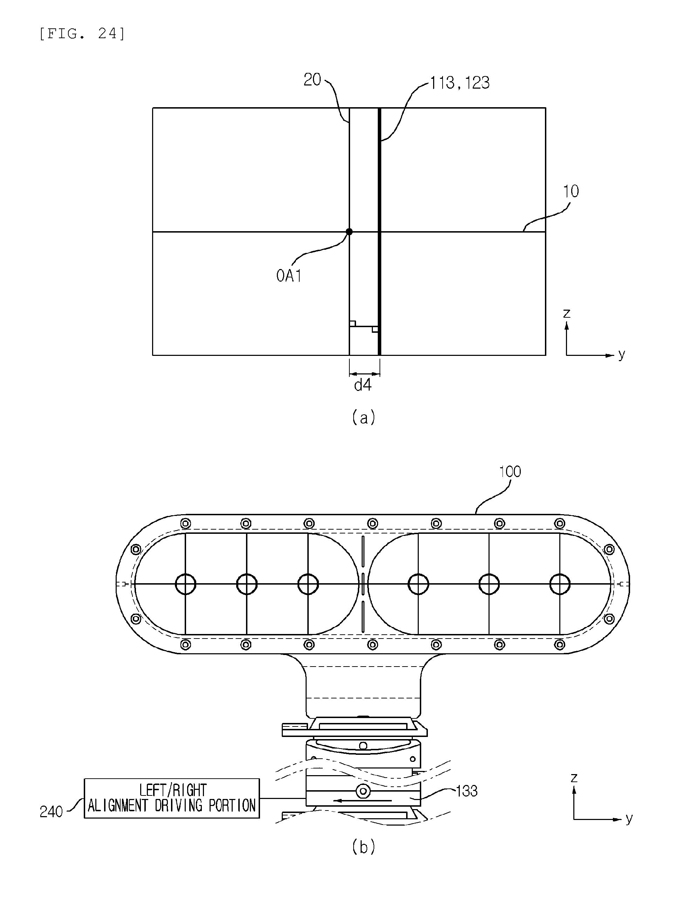

Meanwhile, the Y stage 133 is disposed below the elevator 134 and functions to enable the body portion 140 to perform a linear motion in left and right directions (on the Z-Y plane). The Y stage 133 has a meaning as a means of moving the relatively very light body portion 140 to the left and right (on the Z-Y plane), without a need to move a heavy rig of the reference camera for optical axis alignment. The Y stage 133 compensates for a distance (d4 of FIG. 24) between the first vertical line 20 of the reference camera and the vertically aligned first vertical reference line 113 and second vertical reference line 123.

The aforementioned exemplary embodiment is disposed in front of left-eye and right-eye cameras and thereby used, and may be combined with a moving means including a support for ease of movement. The exemplary embodiment may be formed to be connected to rigs of left-eye and right-eye cameras in a predetermined mechanical form.

Next, an alignment driving portion 200 will be described.

The alignment driving portion 200 is combined with the alignment portion 130 to be power transferable, and functions to provide driving power for moving the alignment portion 130. The alignment driving portion 200 may be divided into a left/right gradient alignment driving portion 210, a forward/backward gradient alignment driving portion 220, an upward/downward alignment driving portion 230, a left/right alignment driving portion 240, and a rotation driving portion 250 based on driving power that is assigned to move, in upward/downward, left/right, forward/backward, or rotation directions, the body portion 140 in which the first reference portion 110 and the second reference portion 120 are fixed.

The alignment driving portions 200 are configured as a unit that includes a motor, a motor controlling portion to control the motor, and a power transferring means to transfer rotation power of the motor as driving power of the alignment portion 130.

FIG. 13 is a configuration diagram to describe an alignment driving portion of an optical axis alignment apparatus for 3D image photographing according to an exemplary embodiment of the present invention.

As illustrated in FIG. 13, the left/right gradient alignment driving portion 210 is combined with the first go-near stage 131. The left/right gradient alignment driving portion 210 provides driving power to enable the body portion 140 to perform an arc motion in left and right directions. Even though not illustrated in FIG. 13, a motor and a predetermined power transferring means are disposed within the left/right gradient alignment driving portion 210 so that the rotation power of the motor may trigger the left-and-right arc motion of an upper plate of the first go-near stage 131. Here, the power transferring means may be combined with a gear or a belt-pulley. The forward/backward gradient alignment driving portion 220 is combined with the second go-near stage 132. The forward/backward gradient alignment driving portion 220 provides driving power to enable the body portion 140 to perform an arc motion in backward and forward directions. Even though not illustrated in FIG. 13, a motor and a predetermined power transferring means are disposed within the forward/backward gradient alignment driving portion 220 so that the rotation power of the motor may trigger the forward-and-backward arc motion of the upper plate of the second go-near stage 132. Here, the power transferring means may be combined with a gear or a belt-pulley.

The rotation driving portion 250 is combined with the rotator 135. The rotation driving portion 250 provides driving power to rotate the body portion 140 by employing an axial center of the body portion 140 as a rotation center on the X-Y plane. A rotation shaft is provided within the rotation driving portion 250. The rotation driving portion 250 includes a motor and a power transferring means to directly or indirectly rotate the rotation shaft. As the power transferring means, a gear assembly for transferring driving power of the motor to the rotation shaft may be provided.

The upward/downward alignment driving portion 230 is combined with the elevator 134. The upward/downward alignment driving portion 230 provides driving power to elevate the body portion 140 upward and downward. Instead of the handle portion (H) for controlling rotation of the lead screw 134b, a motor may be provided. A predetermined power transferring means may be formed so that the rotation power of the motor may be switched to rotation power of the lead screw 134b.

The left/right alignment driving portion 240 is combined with the Y stage 133. The left/right alignment driving portion 240 provides driving power to enable the body portion 140 to perform a linear motion in left and right directions. A motor and a power transferring means may be provided within the Y stage 133 so that the rotation power of the motor may be switched to the left-and-right linear motion of an upper portion of the Y stage 133. Here, the power transferring means may be configured through combination with a rack gear and a pinion to be combined with the motor and a rack gear.

The aforementioned respective power transferring means of the alignment driving portion 200 are only examples proposed to help understanding of the present invention and thus, the present invention is not limited thereto. A combination relationship between the motor and the power transferring means and a detailed combination relationship between the alignment portion 130 and the power transferring means correspond to the known art and thus, a further detailed description will be omitted here.

A motor controlling portion provided to each of the alignment driving portions 210, 220, 230, and 240 functions to receive a horizontal alignment driving signal or a vertical alignment driving signal, which will be described below, and to control a rotation angle of the motor, a rotation velocity, and the like. The alignment driving portions 210, 220, 230, and 240 may be configured to be manually adjusted by a user using a controlling apparatus including a separate user driving interface, such as a remote controller.

Next, an alignment controlling portion 300 will be described.

The alignment controlling portion 300 functions to control the alignment driving portion 200 in order to horizontally align the first horizontal line 10 of the reference camera, the first reference line 111, and the second reference line 121, and to control the alignment driving portion 200 in order to vertically align the second horizontal line 20 of the reference camera, the first vertical reference line 113, and the second vertical reference line 123. After completing the horizontal and vertical alignment of the reference camera, the alignment controlling portion 300 functions to control a rig controlling portion of a rig of the other camera for assigning a motion, for horizontal and vertical alignment with respect to an optical axis of the other camera based on the aligned first reference line 111 and second reference line 121, and the aligned first vertical reference line 113 and second vertical reference line 123.

That is, the alignment controlling portion 300 functions to generate a horizontal alignment driving signal and a vertical alignment driving signal, to transmit the horizontal alignment driving signal and the vertical alignment driving signal to the alignment driving portion 200, to generate a horizontal alignment rig driving signal and a vertical alignment rig driving signal, and to transmit the horizontal alignment rig driving signal and the vertical alignment rig driving signal to the rig controlling portion of the camera.

FIGS. 14A and 14B are views illustrating a view finder of a camera displaying the first horizontal line, the first reference line, and the second reference line before horizontal alignment.

Here, a horizontal alignment driving signal refers to a driving control signal of the alignment driving portion 200 for moving the first reference portion 110 and the second reference portion 120, so that the first reference line 111 and the second reference line 121 tilted with respect to the first horizontal line 10 of the reference camera as illustrated in FIG. 14A may be horizontally aligned on the first reference line 10. Specifically, the horizontal alignment driving signal is transmitted to the left/right gradient alignment driving portion 210, the forward/backward gradient alignment driving portion 220, and the upward/downward alignment driving portion 230 of FIG. 14B to command the first go-near stage 131, the second go-near stage 132, and the elevator 134 to move.

To generate the horizontal alignment driving signal, the alignment controlling portion 300 receives image data of the first reference line 111 and the second reference line 121 through a lens of the reference camera. As illustrated in FIG. 14A, the received image data is displayed on a view finder of the reference camera on which the first horizontal line 10 and the first vertical line 20 are displayed, or a screen of a monitor displaying the view finder.

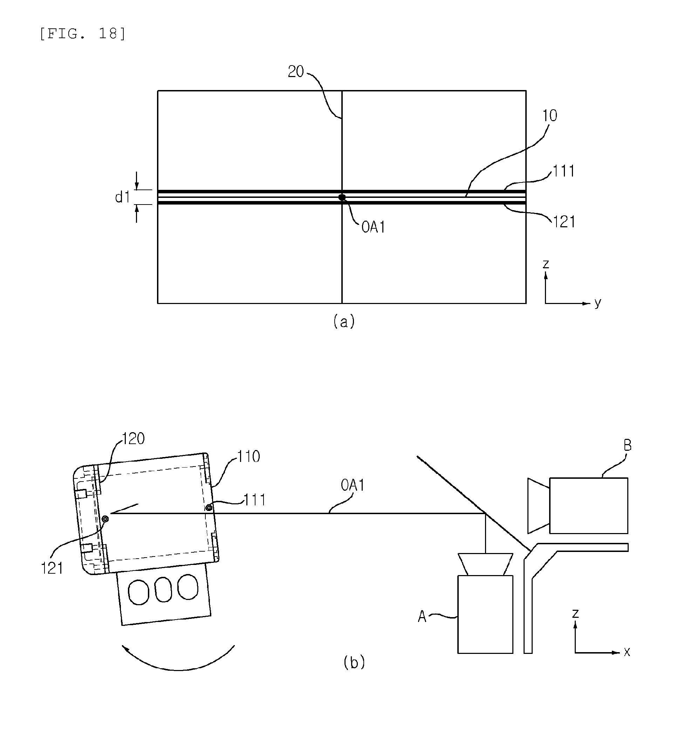

Here, an alignment error of the first reference line 111 and the second reference line 121 with respect to the first horizontal line 10 includes a gradient (R1), a distance (d1) between the first reference line 111 and the second reference line 121, and a distance (d2 of FIG. 18) between the horizontally aligned first reference line 111 and second reference line 121 and the first horizontal line 10.

The gradient (R1) indicates a level at which the first reference portion 110 and the second reference portion 120 are horizontally tilted with respect to the reference camera, and is extracted by comparing an image of the first reference line 111 and the second reference line 121 with an image of the first vertical line 10. To compensate for the gradient (R1), the alignment controlling portion 300 generates a horizontal alignment driving signal for enabling the first go-near stage 131 to perform an arc motion in left and right directions, and transmits the horizontal alignment driving signal to the left/right gradient alignment driving portion 210.

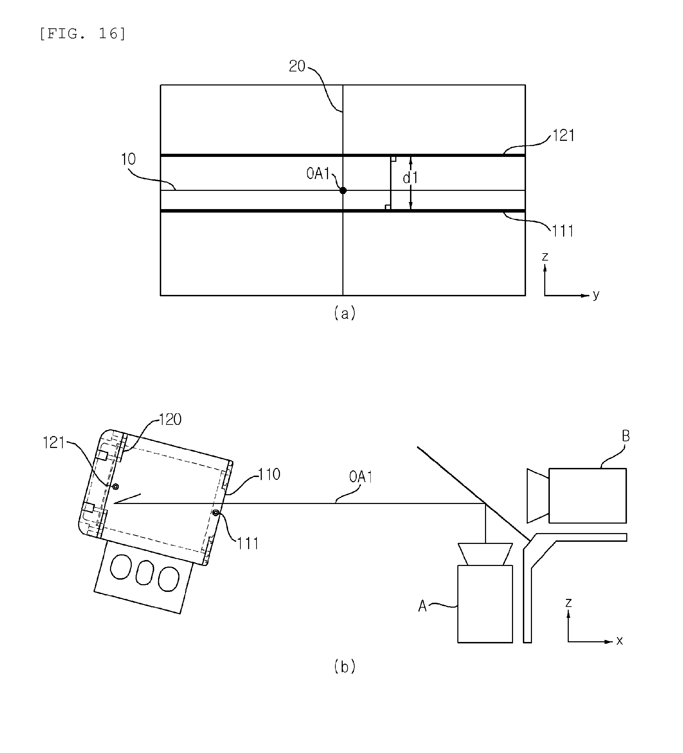

FIGS. 15A and 15B are views illustrating a view finder of a camera displaying the first reference line and the second reference line in which a gradient is compensated for in a state of FIGS. 14A and 14B, and FIGS. 16A and 16B are views illustrating a view finder of a camera displaying another state of the first reference line and the second reference line in which a gradient is compensated for in the state of FIGS. 14A and 14B.

As illustrated in FIG. 15A, when the gradient (R1) is compensated for through the left-and-right arc motion of the first go-near stage 131, the first horizontal line 10 of the reference camera (A), the first reference line 111, and the second reference line 121 become to be in a parallel state. However, as illustrated in FIG. 15B, based on forward and backward directions with respect to the first horizontal line 10, the first reference line 111 and the second reference line 121 are tilted counterclockwise and separate from each other by d1 of FIG. 15A. The above situation may be illustrated as another state in which first reference line 111 and the second reference line 121 are tilted clockwise based on forward and backward directions as illustrated in FIG. 16B and thereby separate by d1 of FIG. 16A.

The distance (d1) between the first reference line 111 and the second reference line 121 indicates a level at which the first reference portion 110 and the second reference portion 120 are tilted forward and backward with respect to the optical axis (OA1) of the reference camera (A), and is extracted through the alignment controlling portion 300 by comparing images of the first reference line 111 and the second reference line 121. To compensate for the distance (d1), the alignment controlling portion 300 generates a horizontal alignment driving signal for enabling the second go-near stage 132 to perform an arc motion in forward and backward directions, and transmits the horizontal alignment driving signal to the forward/backward gradient alignment driving portion 220.

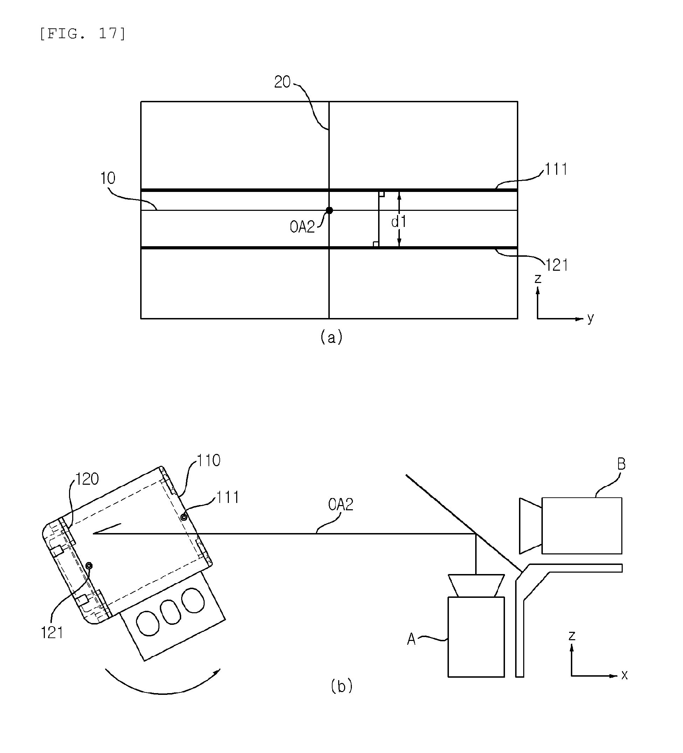

FIGS. 17A and 17B, and FIGS. 18A and 18B are views illustrating a view finder of a camera displaying a distance level between the first reference line and the second reference line based on a driving direction of the forward/backward gradient alignment driving portion.

When the forward/backward gradient alignment driving portion 220 drives the second go-near stage 132 counterclockwise as illustrated in FIG. 17B in the state of FIGS. 15A and 15B, the distance (d1) increases as illustrated in FIG. 17A. On the other hand, when the forward/backward gradient alignment driving portion 220 drives the second go-near stage 132 clockwise as illustrated in FIG. 18B in the state of FIGS. 15A and 15B, the distance (d1) decreases as illustrated in FIG. 18A and thus, is compensated for. Accordingly, the forward/backward gradient alignment driving portion 220 receives a horizontal alignment driving signal from the alignment controlling portion 300 to drive the second go-near stage 132 clockwise to thereby compensate for the distance (d1), as illustrated in FIGS. 18A and 18B.

FIGS. 19A and 19B are views illustrating a view finder of a camera displaying a state in which the first reference line and the second reference line are aligned in a state of FIGS. 15A and 15B or FIGS. 16A and 16B.

When the distance (d1) between the first reference line 111 and the second reference line 121 is compensated for, the first reference line 111 and the second reference line 121 are displayed as a single straight line as illustrated in FIG. 19. A distance between the horizontally aligned first reference line 111 and second reference line 121 and the first horizontal line 10 of the reference camera (A) is displayed as d2 of FIG. 19.

The distance (d2) indicates that the first reference portion 110 and the second reference portion 120 have a vertical error with respect to the optical axis (OA1) of the reference camera A, and is extracted through the alignment controlling portion 300 by comparing an image of the horizontally aligned first reference line 111 and second reference line 121 with an image of the first horizontal line 10 of the reference camera A. To compensate for the distance (d2), the alignment controlling portion 300 generates a horizontal alignment driving signal for enabling the elevator 14 to perform a linear motion in upward and downward directions, and transmits the horizontal alignment driving signal to the upward/downward alignment driving portion 230.

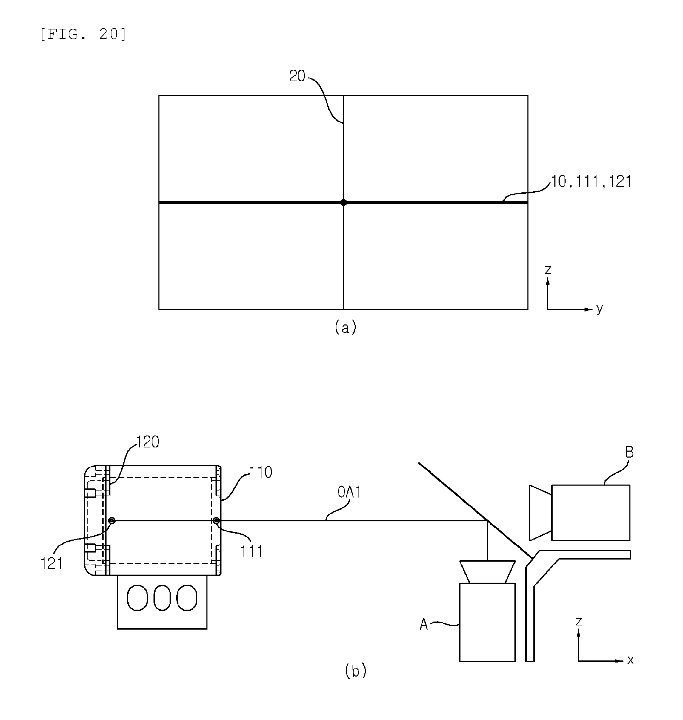

FIGS. 20A and 20B are views illustrating a view finder of a camera displaying a state in which the first horizontal line, the first reference line, and the second reference line are horizontally aligned in a state of FIGS. 19A and 19B.

When the distance (d2) between the horizontally aligned first reference line 111 and second reference line 121 and the first horizontal line 10 of the reference camera (A) is compensated for, the first reference line 111, the second reference line 121, and the first horizontal line 10 are displayed as a single straight line as illustrated in FIGS. 20A and 20B. As illustrated in FIG. 20B, the above state indicates a state in which the optical axis (OA1) of the reference camera (A) is horizontally aligned with the first reference line 111 and the second reference line 121. Next, when fitting an optical axis of the other camera (B) for the horizontally aligned first reference line 111 and second reference line 121, the optical axes of the left-eye and right-eye cameras (A and B) for 3D image photographing achieve the horizontal alignment and thus, may fundamentally prevent the vertical error aforementioned in the background art.

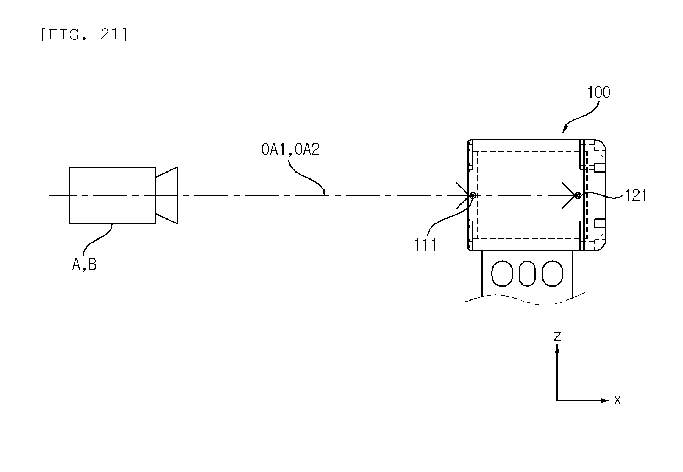

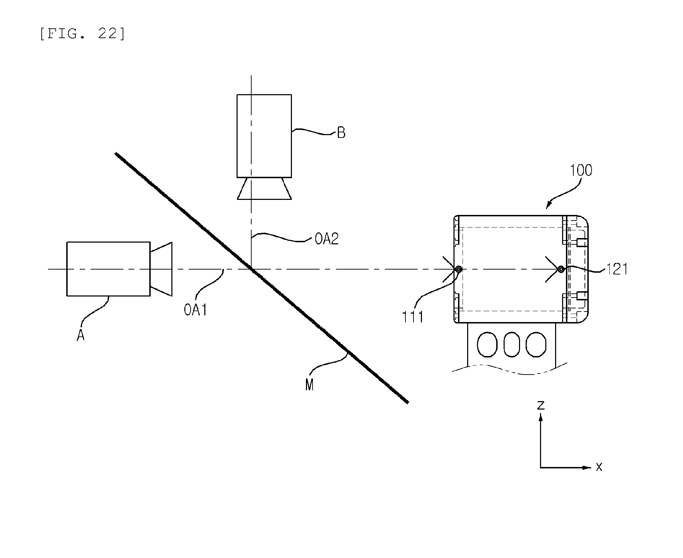

With regard thereto, a state in which optical axes are horizontally aligned will be briefly described with reference to FIGS. 21 and 22.

FIG. 21 is a conceptual diagram to describe a state in which optical axes are aligned using an optical axis alignment apparatus for 3D image photographing according to an exemplary embodiment of the present invention in a parallel-axis camera alignment scheme, and FIG. 22 is a conceptual diagram to describe a state in which optical axes are aligned using an optical axis alignment apparatus for 3D image photographing according to an exemplary embodiment of the present invention in an orthogonal camera alignment scheme.

As illustrated in FIG. 21, in the parallel-axis camera alignment scheme, left-eye and right-eye cameras (A and B) are disposed based on the horizontal direction (based on the Z-Y plane) and thus, may be viewed as a single camera when being viewed from side.

When an optical axis alignment process of the reference camera (A) is performed and an optical axis alignment process of the other camera (B) is performed based thereon, a plane constituted by two optical axes (OA1 and OA2) becomes to be identical to a plane constituted by the first reference line 111 and the second reference line 121. Unlike using a signboard, it can be verified that a vertical error does not occur at any position in a path between two optical axes (OA1 and OA2).

As illustrated in FIG. 22, even in the orthogonal camera alignment scheme, a plane constituted by two optical axes (OA1 and OA2) becomes to be identical to a plane constituted by the first reference line 111 and the second reference line 121 and thus, it can be verified that a vertical error does not occur.

A detailed alignment process of the reference camera (A) and the other camera (B) will be further described in detail below in describing the alignment driving portion 200, the alignment controlling portion 300, and an alignment method.

FIGS. 23A and 23B are views illustrating a view finder of a camera displaying the first vertical line, the first vertical reference line, and the second vertical reference line before vertical alignment.

Meanwhile, a vertical alignment driving signal refers to a driving control signal of the alignment driving portion 200 for moving the first reference portion 110 and the second reference portion 120 so that the first vertical line 20 of the reference camera, the first vertical reference line 113, and the second vertical reference line 123, separate from each other, as illustrated in FIG. 23A may be vertically aligned. Specifically, the vertical alignment driving signal is transmitted to the rotation driving portion 250 of FIG. 23B and the left/right alignment driving portion 240 of FIG. 24B to command the rotator 135 and the Y stage 133 to move, respectively.

To generate the vertical alignment driving signal, the alignment controlling portion 300 receives image data of a plurality of first vertical reference lines 113 formed to be orthogonal to the first reference line 111 and a plurality of second vertical reference lines 123 formed to be orthogonal to the second reference line 121 through a lens of the reference camera. As illustrated in FIG. 23A, the received image data is displayed on the view finder of the reference camera on which the first vertical line 20 is displayed, or a screen of a monitor displaying the view finder.

Here, an alignment error of the first vertical reference line 113 and the second vertical reference line 123 with respect to the first vertical line 20 includes a distance (d3) between the predetermined first vertical reference line 113 and the predetermined second vertical reference line 123, and a distance (d4 of FIG. 24) between the vertically aligned predetermined first vertical reference line 113 and second vertical reference line 123 and the first vertical line 20.

Here, the predetermined first vertical reference line 113 indicates the first vertical reference line 113 closest to the first vertical line 20 among the plurality of first vertical reference lines 113. The predetermined second vertical reference line 123 indicates the second vertical reference line 123 closest to the first vertical line 20 among the plurality of second vertical reference lines 123.

The distance (d3) indicates a level at which the first reference portion 110 and the second reference portion 120 are twisted on the X-Y plane with respect to the optical axis (OA1) of the reference camera (A), and is extracted through the alignment controlling portion 300 by comparing images of the first vertical reference line 113 and the second vertical reference line 123. To compensate for the distance (d3), as illustrated in FIG. 23B, the alignment controlling portion 300 generates a vertical alignment driving signal and transmits the vertical alignment driving signal to the rotation driving portion 250 to rotate the rotator 135 on the X-Y plane counterclockwise or clockwise.

FIGS. 24A and 24B are views illustrating a view finder of a camera displaying a state in which the first vertical reference line and the second vertical reference line are horizontally aligned in a state of FIGS. 23A and 23B.

As illustrated in FIGS. 24A and 24B, when rotating the rotator 135 counterclockwise on the X-Y plane to compensate for the distance (d3) in the state of FIGS. 23A and 23B, the first vertical reference line 113 and the second vertical reference line 123 are displayed as a single straight line. A distance between the vertically aligned first vertical reference line 113 and second vertical reference line 123 and the first vertical line 20 of the reference camera (A) is indicated as d4 of FIG. 24A.

The distance (d4) indicates that the first reference portion 110 and the second reference portion 120 have a horizontal error with respect to the optical axis (OA1) of the reference camera (A), and is extracted through the alignment controlling portion 300 by comparing an image of the vertically aligned first vertical reference line 113 and second vertical reference line 123 with an image of the first vertical line 20 of the reference camera (A). To compensate for the distance (d4), the alignment controlling portion 300 generates a vertical alignment driving signal for enabling the Y stage 133 to perform a linear motion in left and right directions, and transmits the vertical alignment driving signal to the left/right alignment driving portion 240.

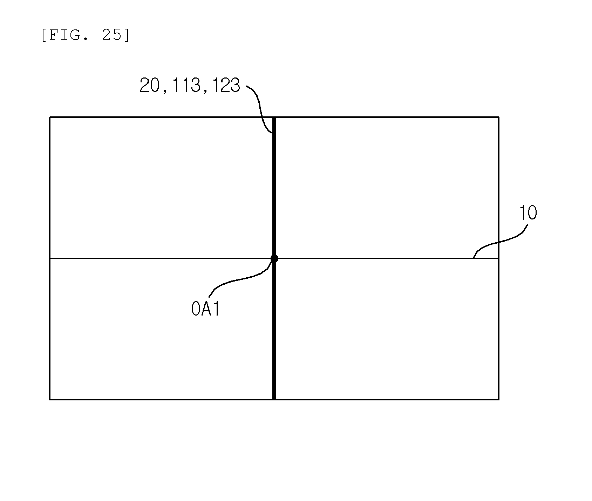

FIG. 25 is a view illustrating a view finder of a camera displaying a state in which the first horizontal line, the first reference line, and the second reference line are vertically aligned in a state of FIGS. 24A and 24B.

When the Y stage 133 moves the first reference portion 110 and the second reference portion 120 to the left (based on FIG. 23B) in the state of FIGS. 24A and 24B to thereby compensate for the distance (d4), the first vertical reference line 113, the second vertical reference line 123, and the first vertical line 20 are displayed as a single straight line as illustrated in FIGS. 24A and 24B. The above state indicates a state in which the optical axis (OA1) of the reference camera (A) is vertically aligned with the first vertical reference line 113 and the second vertical reference line 123.

As described above, when the horizontal alignment and the vertical alignment of the first reference portion 110 and the second reference portion 120 with respect to the reference camera (A) is completed, alignment of the optical axis (OA1) of the reference camera (A) for 3D image photographing is terminated. Next, a process of aligning the optical axis (OA2) of the other camera (B) based on the aligned optical axis (OA1) of the reference camera (A) is performed.

With respect thereto, the aforementioned horizontal alignment rig driving signal and vertical alignment rig driving signal refer to control signals that are transmitted from the alignment controlling portion 300 to a rig controlling portion of the other camera (B) in order to align the optical axis (OA2) of the other camera (B) based on the aligned optical axis (OA1) of the reference camera (A).

Initially, the horizontal alignment rig driving signal refers to a driving control signal for moving the rig of the other camera (B) so that the first reference line 111 and the second reference line 121 horizontally aligned on the optical axis (OA1) of the reference camera (A) and the second horizontal line 30 passing the optical axis (OA2) of the other camera (B) may be horizontally aligned.

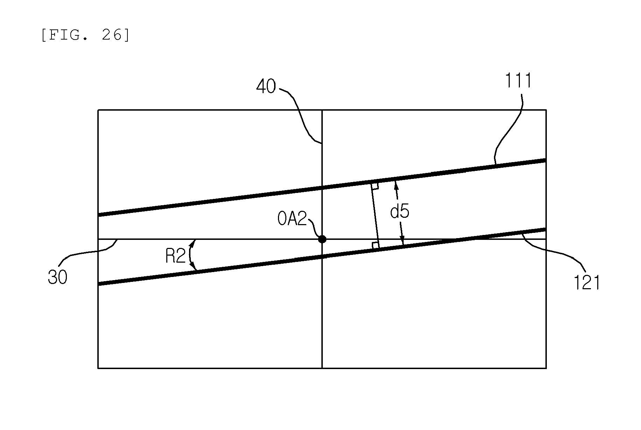

FIG. 26 is a view illustrating a view finder of a camera displaying the second horizontal line of the other-way camera before horizontal alignment, an optical axis of a one-way camera, and the horizontally aligned first reference line and second reference line.

Specifically, the horizontal alignment rig driving signal is transmitted to the rig controlling portion (C of FIG. 13) to control a rig for assigning, to the other camera B, a motion in forward/backward, left/right, upward/downward, and rotation directions and thereby controls the rig so that the second horizontal line 30 of the other camera (B), the first reference line 111, and the second reference line 121 may be horizontally aligned.

To generate the horizontal alignment rig driving signal, the alignment controlling portion 300 receives image data of the first reference line 111 and the second reference line 121 through a lens of the other camera. Here, the first reference line 111 and the second reference line 121 are horizontally aligned on the optical axis (OA1) of the reference camera A. As illustrated in FIG. 26, the received image data is displayed on a view finder of the other camera on which the second horizontal line 30 and the second vertical line 40 are displayed, or a screen of a monitor displaying the view finder.

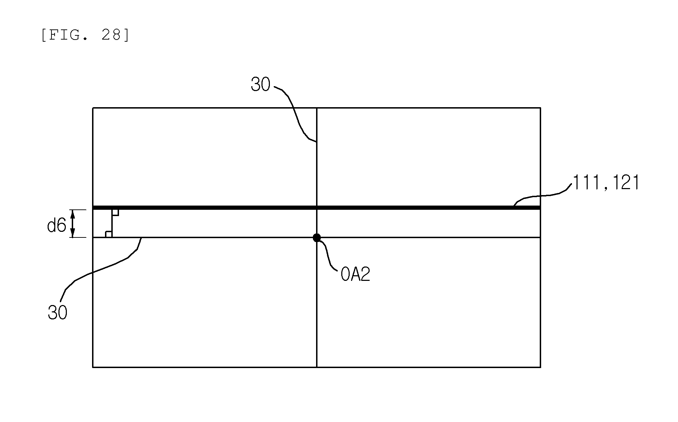

Here, an alignment error of the first reference line 111 and the second reference line 121 with respect to the second horizontal line 30 includes a gradient (R2), a distance (d5) between the first reference line 111 and the second reference line 121, and a distance (d6 of FIG. 28) between the horizontally aligned first reference line 111 and second reference line 121 and the second horizontal line 30.

The gradient (R2) indicates a level at which the first reference portion 110 and the second reference portion 120 horizontally aligned on the reference camera are horizontally tilted with respect to the second horizontal line 30, and is extracted by comparing an image of the first reference line 111 and the second reference line 121 with an image of the second horizontal line 30. To compensate for the gradient (R2), the alignment controlling portion 300 generates a horizontal alignment rig driving signal for enabling the rig of the other camera to perform an arc motion in left and right directions, and transmits the horizontal alignment rig driving signal to the rig controlling portion (C).

Similar to the alignment portion 130, the rig of the other camera may include driving units including go-near stages for performing a left-and-right arc motion and a forward-and-backward arc motion, X and Y stages, an elevator, a rotation apparatus, and a motor for driving the same.

Motion of the rig of the other camera may be performed in the same manner as the motion of the alignment portion 130 and thus, a further detailed description will be omitted here.

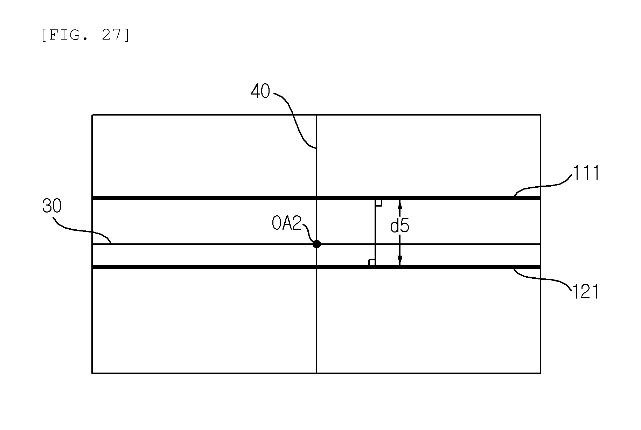

FIG. 27 is a view illustrating a view finder of a camera displaying the first reference line and a second reference line in which a gradient is compensate for in a state of FIG. 26.

When the gradient (R2) is compensated for due to the motion of the rig, the second horizontal line 30, the first reference line 111, and the second reference line 121 are disposed to be parallel with each other as illustrated in FIG. 27. However, the first reference line 111 and the second reference line 121 are tilted based on forward and backward directions with respect to the second horizontal line 30 and thus, have a distance by d5 of FIG. 27 between the reference line 111 and the second reference line 121. The above situation indicates a level at which the first reference portion 110 and the second reference portion 120 are tilted to forward and backward directions with respect to the optical axis (OA2) of the other camera (B), and the distance (d50 between the first reference line 111 and the second reference line 121 is extracted through the alignment controlling portion 300 by comparing images of the first reference line 111 and the second reference line 121. To compensate for the distance (d5), the alignment controlling portion 300 generates a horizontal alignment rig driving signal for enabling the rig of the other camera to perform an arc motion in forward and backward directions, and transmits the horizontal alignment rig driving signal to the rig controlling portion (C).

FIG. 28 is a view illustrating a view finder of a camera displaying a state in which the first reference line and the second reference line are aligned in a state of FIG. 27.

When the distance (d5) between the first reference line 111 and the second reference line 121 is compensated for, the first reference line 111 and the second reference line 121 are displayed as a single straight line as illustrated in FIG. 28. A distance between the horizontally aligned first reference line 111 and second reference line 121 and the second horizontal line 30 of the other camera (B) is displayed as d6 of FIG. 28.

The distance (d6) indicates that the first reference portion 110 and the second reference portion 120 horizontally aligned with respect to the optical axis (OA1) of the reference camera (A) have a vertical error with respect to the optical axis (OA2) of the other camera (B), and is extracted through the alignment controlling portion 300 by comparing an image of the horizontally aligned first reference line 111 and second reference line 121 with an image of the second horizontal line 30 of the reference camera (B). To compensate for the distance (d6), the alignment controlling portion 300 generates a horizontal alignment rig driving signal for enabling the other camera (B) to perform a linear motion in upward and downward directions on the rig, and transmits the horizontal alignment rig driving signal to the rig controlling portion (C).

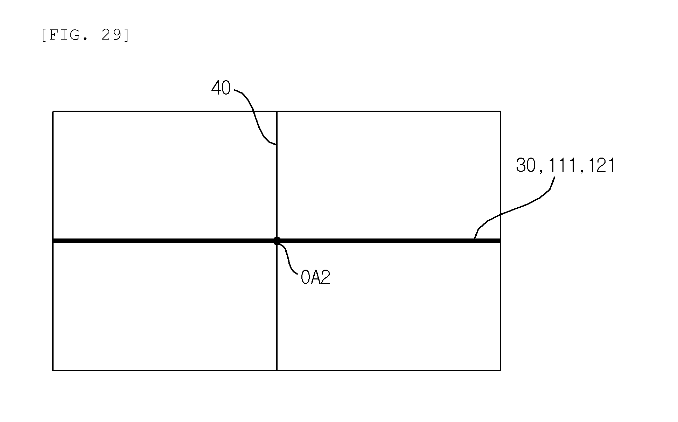

FIG. 29 is a view illustrating a view finder of a camera displaying a state in which the second horizontal line, the first reference line, and the second reference line are horizontally aligned in a state of FIG. 28.

When the distance (d6) is compensated for, the first reference line 111, the second reference line 121, and the second horizontal line 30 are displayed as a single straight line as illustrated in FIG. 29. The above state indicates a state in which the optical axis (OA1) of the reference camera (A) and the optical axis (OA2) of the other camera (B) are horizontally aligned through the first reference line 111 and the second reference line 121.

FIG. 30A is a view illustrating a view finder of a camera displaying the second vertical line, the first vertical reference line, and the second vertical reference line before vertical alignment, and FIG. 30B is a view to describe an alignment error of the other-way camera with the first vertical reference line and the second vertical reference line in a parallel-axis camera alignment scheme. In particular, for easy understanding, FIG. 30B is a view in which a front view of the first reference portion 110 and the second reference portion 120 is combined with a top view of the camera (A<B).

Here, a horizontal alignment rig driving signal refers to a driving control signal for moving the rig of the other camera (B) so that a predetermined first vertical reference line (113b of FIG. 30) and a predetermined second vertical reference line (123b of FIG. 30), and the second vertical line 40 passing the optical axis (OA2) of the other camera (B) may be vertically aligned.

Here, as illustrated in FIG. 30B, in a parallel-axis camera alignment scheme, the predetermined first vertical reference line 113b and the predetermined second vertical reference line 123b indicate vertical reference lines that are separate from the first vertical reference line (113a of FIG. 30) and the second vertical reference line (123a of FIG. 30) vertically aligned with respect to the optical axis (OA1) of the reference camera (A). A distance (D3) corresponds to a distance (D1) between the reference camera (A) and the other camera (B) on the rig. According to an exemplary embodiment, when an interval of a first vertical reference line or a second vertical reference line is formed to be 50 mm, the other camera (B) needs to be moved to the left and right (based on FIG. 30B) on the rig so that the distance (D3)and the distance (D1) may become 200 mm.

The distance (D3) may be modified based on a photographing environment. Based on the modified distance (D3), the other camera (B) is moved to the left and right on the rig. Accordingly, a size of the first reference portion 110 and the second reference portion 120 may be formed to correspond to a width of the rig.

By horizontally and vertically aligning the optical axis (OA2) of the other camera (B) in the first vertical reference line 113 and the second vertical reference line 123 minimizing the distance (D3) and then moving the other camera (B) to maximize the distance (D3), thereby verifying a horizontal and vertical alignment state, it is possible to test whether an error is present in the rig itself. Accordingly, an exemplary embodiment may be employed as a standard means for providing reference to develop a camera rig for 3D image photographing.

To generate a vertical alignment rig driving signal, the alignment controlling portion 300 receives image data of the first vertical reference line 113a and the second vertical reference line 123a through a lens of the other camera. Here, the first vertical reference line 113a and the second vertical reference line 123a are vertically aligned on the optical axis (OA1) of the reference camera A. As illustrated in FIG. 30A, the received image data is displayed on a view finder of the other camera on which the second horizontal line 30 and the second vertical line 40 are displayed , or a screen of a monitor displaying the view finder.

The alignment controlling portion 30 feeds back and thereby transmits a vertical alignment rig driving signal to the rig controlling portion (C) until the second vertical line 40, the first vertical reference line 113a and the second vertical reference line 123a are aligned as a single straight line. Due to the fed back and thereby transmitted vertical alignment rig driving signal, the rig rotates the other camera (B) clockwise and at the same time, moves the same to the left as illustrated in FIG. 30B, thereby vertically aligning the first vertical reference line 113a and the second vertical reference line 123a on the second vertical line 40.

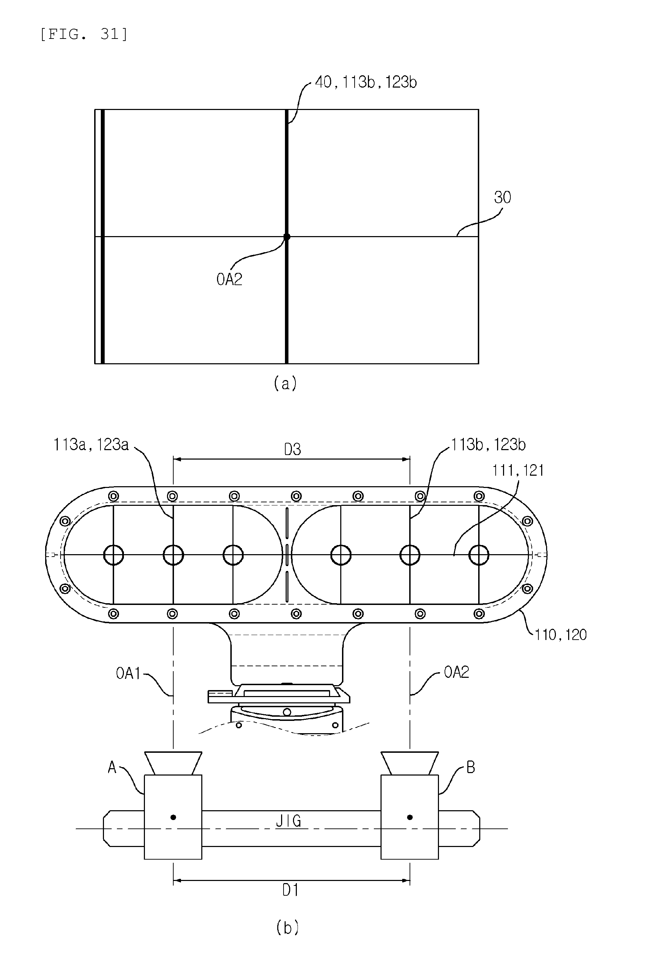

FIG. 31A is a view illustrating a view finder of a camera displaying the second vertical line, the first vertical reference line, and the second vertical reference line after vertical alignment, and FIG. 31B is a view to describe vertical alignment of the first vertical reference line and the second vertical reference line with respect to the optical axis of the other-way camera in a parallel-axis camera alignment scheme.

When the vertical alignment with respect to the optical axis (OA2) of the other camera (B) is completed, the second vertical line 40, the first vertical reference line 113b, and the second vertical reference line 123b are displayed as a single straight line as illustrated in FIG. 31A. The above state indicates a state in which the optical axis (OA1) of the reference camera (A) and the optical axis (OA2) of the other camera (B) are vertically aligned through the first vertical reference line 113b and the second vertical reference line 123b.

As described above, when the optical axis (OA1) of the reference camera (A) and the optical axis (OA2) of the other camera (B) are horizontally aligned and vertically aligned, it is possible to easily align optical axes of a left-eye camera and a right-eye camera while fundamentally preventing the aforementioned vertical error. Accordingly, it is possible to provide an environment capable of photographing a high quality 3D image.

Hereinafter, an alignment method of vertically and horizontally aligning optical axes of a left-eye camera and a right-eye camera constructed as above according to an exemplary embodiment of the present invention will be described.

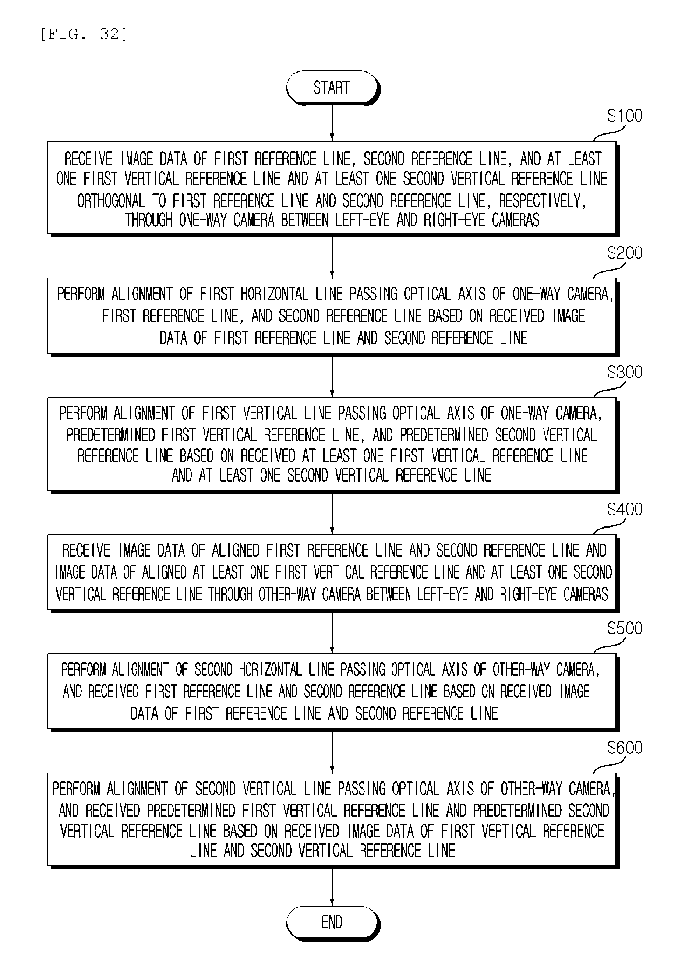

FIG. 32 is a flowchart to describe an optical axis alignment method for 3D image photographing according to the present invention.

### S100

As illustrated in FIG. 32, in operation S100, image data of the first reference line 111, the second reference line 121, and at least one first vertical reference line 113 and at least one second vertical reference line 123 orthogonal to the first reference line 111 and the second reference line 121, respectively, are initially received through a reference camera between the left-eye camera and the right-eye camera.

### S200

Next, in operation S200, alignment of the first horizontal line 10 passing the optical axis (OA1) of the reference camera, the first reference line 111, and the second reference line 121 is performed based on the received image data of the first reference line 111 and the second reference line 121.

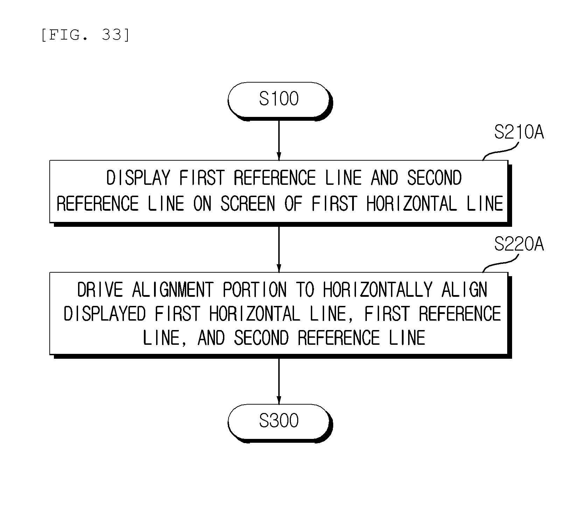

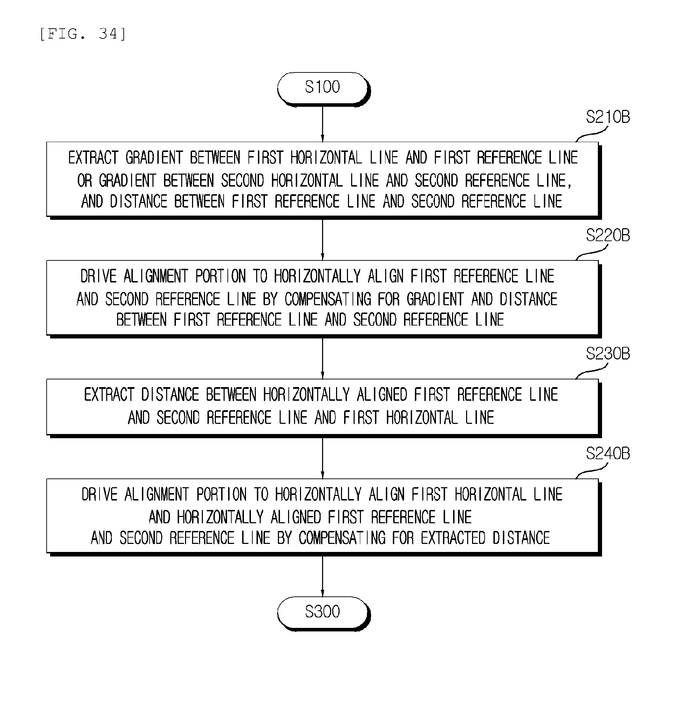

FIG. 33 is a flowchart to describe a process of manually performing horizontal alignment in operation S200 of FIG. 32, and FIG. 34 is a flowchart to describe a process of automatically performing horizontal alignment in operation S200 of FIG. 32.

Referring to FIG. 33, when a user manually performs horizontal alignment while viewing a view finder of the reference camera or a monitor, the first reference line 111 and the second reference line 121 are initially displayed on a screen of the first horizontal line 10 (S210A). Next, the user drives the alignment portion 130 to horizontally align the displayed first horizontal line 10, first reference line 111, and second reference line 121 (S220A).

Referring to FIG. 34, when automatically performing horizontal alignments, the gradient (R) between the first horizontal line 10 and the first reference line 111 or the second reference line 121, and the distance (d1) between the first reference line 111 and the second reference line 121 are initially extracted (S210B). Next, the alignment portion 130 may be driven to horizontally align the first reference line 111 and the second reference line 121 by compensating for the gradient (R) and the distance (d1) (S220B).

Next, the distance (d2) between the horizontally aligned first reference line 111 and second reference line 121 and the first horizontal line 10 is extracted (S230B). The alignment portion 130 is driven to horizontally align the first horizontal line 10 and the horizontally aligned first reference line 111 and second reference line 121 by compensating the extracted distance (d2) (S240B).

### S300

In operation S300, alignment of the first vertical line 20 passing the optical axis (OA1) of the reference camera, the predetermined first vertical reference line 113, and the predetermined second vertical reference line 123 is performed based on the received at least one first vertical reference line 113 and at least one second vertical reference line 123.

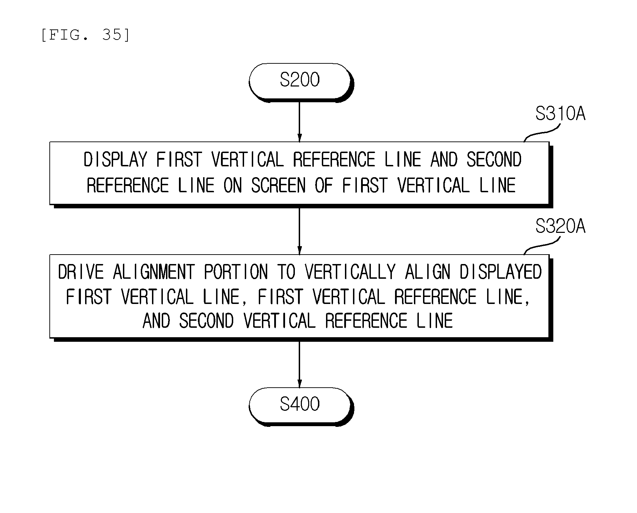

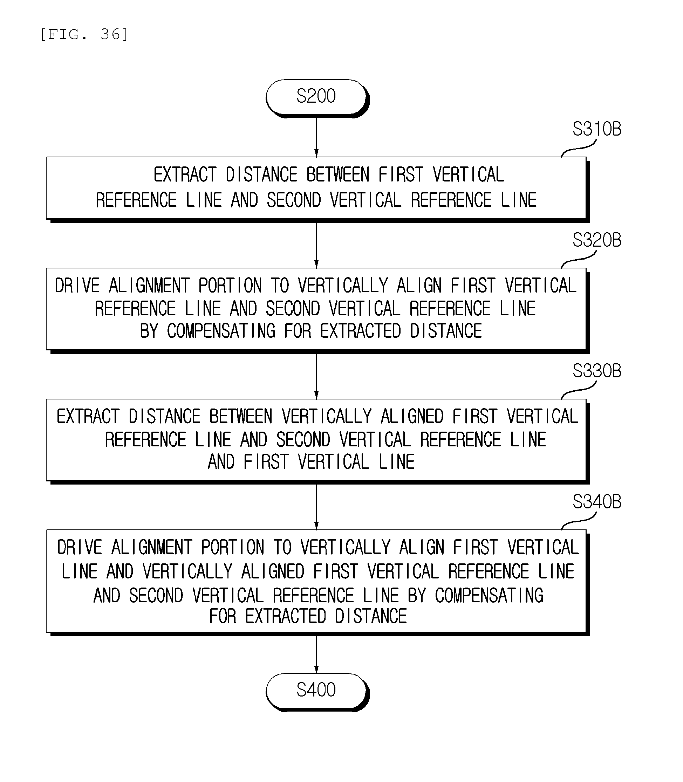

FIG. 35 is a flowchart to describe a process of manually performing vertical alignment in operation S300 of FIG. 32, and FIG. 36 is a flowchart to describe a process of automatically performing vertical alignment in operation S300 of FIG. 32.

Referring to FIG. 35, when the user manually performs vertical alignment while viewing the view finder of the reference camera or the monitor, the first vertical reference line 113 and the second vertical reference line 123 are initially displayed on a screen of the first vertical line 20 (S310A). Next, the user drives the alignment portion 130 to vertically align the displayed first vertical line 20, first vertical reference line 113, and second vertical reference line 123 (S320A). Referring to FIG. 36, when automatically performing vertical alignment, the distance (d3) between the first vertical reference line 113 and the second vertical reference line 123 is initially extracted (S310B). Next, the alignment portion 130 is driven to vertically align the first vertical reference line 113 and the second vertical reference line 123 by compensating for the extracted distance (d3) (S320B). Next, the distance (d4) between the vertically aligned first vertical reference line 113 and second vertical reference line 123 and the first vertical line 20 is extracted (S330B). Next, the alignment portion 130 is driven to vertically align the first vertical line 20, and the vertically aligned first vertical reference line 113 and second vertical reference line 123 by compensating for the extracted distance (d4) (S340B).

### S400

In operation S400, image data of the first reference line 111 and the second reference line 121 aligned in operation S200, and image data of at least one first vertical reference line 113 and at least one second vertical reference line 123 aligned in operation S300 is received through the other camera.

### S500

In operation S500, alignment of the second horizontal line 30 passing the optical axis (OA2) of the other camera, and the received first reference line 111 and second reference line 121 is performed based on the image data of the first reference line 111 and the second reference line 121 received in operation S400.

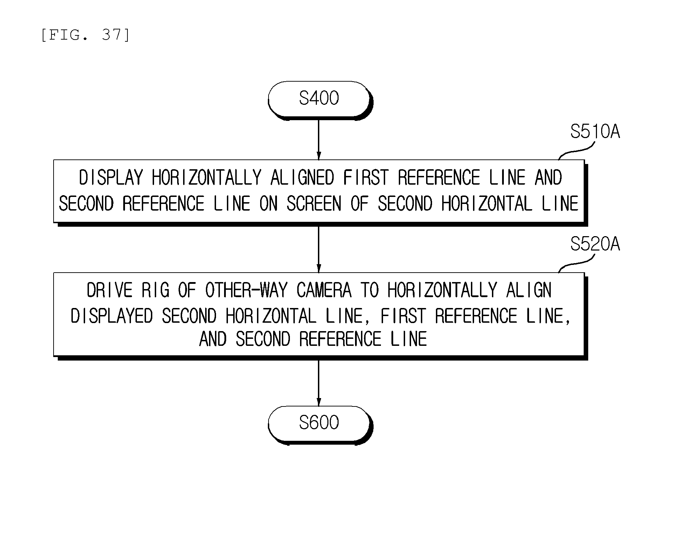

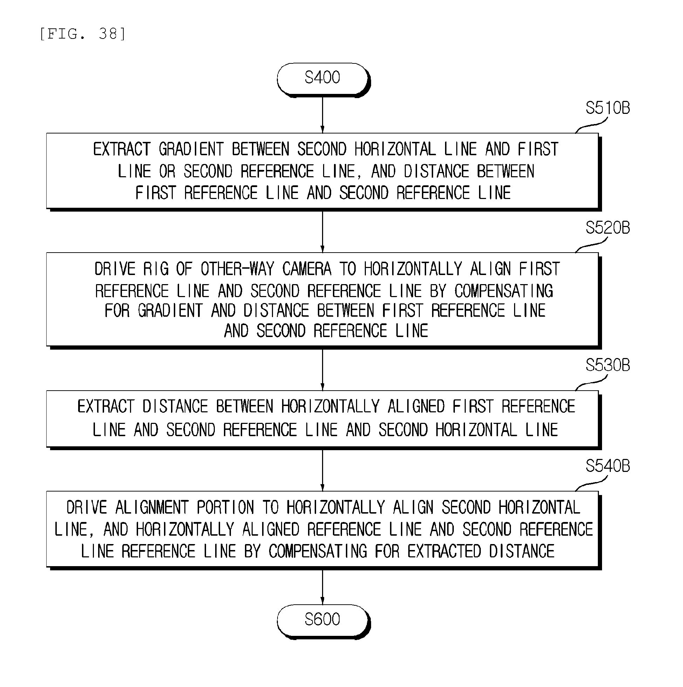

FIG. 37 is a flowchart to describe a process of manually performing horizontal alignment in operation S500 of FIG. 32, and FIG. 38 is a flowchart to describe a process of automatically performing horizontal alignment in operation S500 of FIG. 32.

Referring to FIG. 37, when the user manually performs horizontal alignment while viewing the view finder of the other camera or the monitor, the horizontally aligned first reference line 111 and second reference line 121 are displayed on a screen of the second horizontal line 30 (S510A). Next, the rig of the other camera is driven to horizontally align the displayed second horizontal line 30, reference line 111, and second reference line 121 (S520A).

Referring to FIG. 38, when automatically performing horizontal alignment, the gradient (R2) between the second horizontal line 30 and the first reference line 111 or the second reference line 121, and the distance (d5) between the first reference line 111 and the second reference line 121 are extracted (S510B). Next, the rig of the other camera is driven to horizontally align the first reference line 111 and the second reference line 121 on the view finder of the other camera by compensating for the gradient R2 and the distance (d5) (S520B). Next, the distance (d6) between the horizontally aligned first reference line 111 and second reference line 121 and the second horizontal line 30 is extracted (S530B). Next, the rig of the other camera is driven to horizontally align the second horizontal line 30, and the horizontally aligned first reference line 111 and second reference line 121 by compensating for the extracted distance (d6) (S540B).

### S600

In operation S600, alignment of the second vertical line 40 passing the optical axis (OA2) of the other camera, and the first vertical reference line 113 and the second vertical reference line 123 received in operation S400 is performed based on the image data of the first vertical reference line 113 and the second vertical reference line 123 received in operation S400.

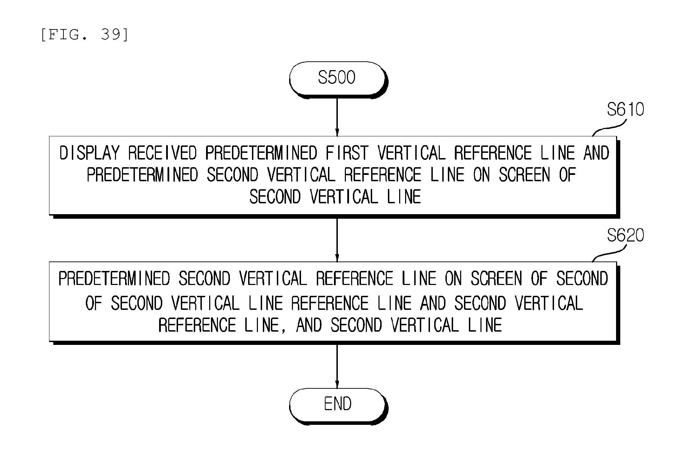

FIG. 39 is a flowchart to describe a process of manually performing vertical alignment in operation S600 of FIG. 32.

Referring to FIG. 39, when the user manually performs vertical alignment while viewing the view finder of the other camera or the monitor, the received predetermined first vertical reference line 113 and predetermined second vertical reference line 123 are displayed on a screen of the second vertical line 40 (S610). Next, the rig of the camera is driven to vertically align the displayed first vertical reference line 113, second vertical reference line 123, and second vertical line 40 (S620).

As described above, when automatically performing vertical alignment, the rig of the other camera is feedback-controlled to vertically align the second vertical line 40, the first vertical reference line 113, and the second vertical reference line 123.

The optical axis alignment apparatus for 3D image photographing according to the exemplary embodiments of the present invention is described above.

The forgoing exemplary embodiments are illustrative only and are not intended to be in any way limiting. The scope of the present invention should be represented by the appended claims and it should be analyzed that all spirits within a scope equivalent thereto are included in the appended claims of the present invention.
10: First horizontal line
20: First vertical line
30: Second horizontal line
40: Second vertical line
110: First reference portion
111: First reference line
112: Plate
113: First vertical reference line
114: Wire fixing portion
120: Second reference portion
121: Second reference line
122: Plate
123: Second vertical reference line
130: Alignment portion
131: First go-near stage
132: Second go-near stage
133: Y stage
134: Elevator
134a: Boss portion
134b: Lead screw
134c: Elevating frame 134d: Moving block
135: Rotator
140: Body portion
141: Combining bracket
200: Alignment driving portion
210: Left/right gradient alignment driving portion
220: Forward/backward gradient alignment driving portion
230: Upward/downward alignment driving portion
240: Left/right alignment driving portion
250: Rotation driving portion
300: Alignment controlling portion

## Claims

1. An optical axis alignment apparatus for image photographing, the apparatus comprising:
a first reference portion formed with a first reference line and formed to be visible;
a second reference portion separate from the first reference portion to face the first reference portion, and formed with a second reference line that is positioned on the same plane as the first reference line; and
an alignment portion combined with the first reference portion and the second reference portion to assign a motion of the first reference portion and the second reference portion so that an optical axis of a one-way camera between a left-eye camera and a right-eye camera is positioned on the same plane constituted by the first reference line and the second reference line.

2. The apparatus of claim 1, wherein:
the first reference portion has an open frame shape, and
the first reference line is formed using a wire that connects one side and the other side of the open frame.

3. The apparatus of claim 1, wherein:
the first reference portion has an open frame shape, and
the first reference line is formed on a plate that is combined with the open frame, and has light transmissivity.

4. The apparatus of claim 3, wherein at least one first vertical reference line orthogonal to the first reference line is formed on the plate.

5. The apparatus of claim 1, wherein:
the second reference portion has an open frame shape, and
the second reference line is formed on a plate that is combined with the open frame.

6. The apparatus of claim 5, wherein at least one second vertical reference line orthogonal to the second reference line is formed on the plate.

7. The apparatus of claim 5, wherein the plate is formed using a translucent material.

8. The apparatus of claim 1, further comprising:
a light source portion disposed at the rear of the second reference portion to irradiate light toward the first reference portion.

9. The apparatus of claim 8, wherein the light source portion is formed using a light emitting diode (LED).

10. The apparatus of claim 1, further comprising:
a body portion integrally combining the first reference portion and the second reference portion, and combined with the alignment portion.

11. The apparatus of claim 1, wherein the alignment portion is disposed in a multi-stage form in a lower portion of the first reference portion and the second reference portion, and comprises:
a left/right go-near stage enabling the first reference portion and the second reference portion to perform an arc motion in left and right directions;
a forward/backward go-near stage enabling the first reference portion and the second reference portion to perform the arc motion in forward and backward directions; and
a left/right stage enabling the first reference portion and second reference portion to perform a linear motion in left and right directions.

12. The apparatus of claim 11, further comprising:
an elevator moving the first reference portion and the second reference portion upward and downward.

13. The apparatus of claim 12, wherein the elevator is disposed between the upward/downward go-near stage and the left/right stage.

14. The apparatus of claim 12, wherein the elevator comprises:
a boss portion including a handle portion capable of controlling a rotation; and
a lead screw moving portion connected to an upper portion of the boss portion to perform a linear motion in upward and downward directions in interaction with the rotation of the handle portion.

15. The apparatus of claim 12, further comprising:
a rotator to rotate the first reference portion and the second reference portion.

16. The apparatus of claim 15, wherein the rotator is disposed on the elevator.

17. The apparatus of claim 11, wherein the left/right go-near stage is disposed on the upward/downward go-near stage.

18. The apparatus of claim 1, further comprising:
an alignment driving portion combined with the alignment portion to be power transferable to thereby provide driving power to the alignment portion so that alignment of a first horizontal line passing the optical axis of the one-way camera, the first reference line, and the second reference line is adjustable.

19. The apparatus of claim 18, wherein the alignment driving portion provides the driving power to the alignment portion so that alignment of a first vertical line passing the optical axis of the one-way camera, any one of at least one first vertical reference line orthogonal to the first reference line, and any one of at least one second vertical reference line orthogonal to the second reference line is adjustable.

20. The apparatus of claim 1, further comprising:
an alignment controlling portion to receive image data of the first reference line and the second reference line through the one-way camera, to extract a horizontal alignment error of the first reference line and the second reference line with respect to a first horizontal line, and to generate a horizontal alignment driving signal for compensating for the horizontal alignment error; and
an alignment driving portion combined with the alignment portion to be power transferable, to receive the horizontal alignment driving signal, and to provide driving power to the alignment portion to align the first horizontal line, the first reference line, and the second reference line.

21. The apparatus of claim 20, wherein the horizontal alignment error includes a gradient between the first horizontal line and the first reference line or the second reference line, a distance between the first reference line and the second reference line, and a distance between the horizontally aligned first reference line and second reference and the first horizontal line.

22. The apparatus of claim 20, wherein:
the alignment controlling portion receives image data of at least one first vertical reference line orthogonal to the first reference line and at least one second vertical reference line orthogonal to the second reference line through the one-way camera, extracts a vertical alignment error of the predetermined first vertical reference line and the predetermined second vertical reference line with respect to a first vertical line passing the optical axis of the one-way camera, and generates a vertical alignment driving signal for compensating for the vertical alignment error, and
the alignment driving portion receives the vertical alignment driving signal and provides driving power to the alignment portion to align the first vertical line, the predetermined first vertical reference line, and the predetermined second vertical reference line.

23. The apparatus of claim 20, wherein:
the predetermined first vertical reference line is a first vertical reference line closest to the first vertical line among the at least one first vertical reference line, and
the predetermined second vertical reference line is a second vertical reference line closest to the first vertical line among the at least one second vertical reference line.

24. The apparatus of claim 20, wherein the vertical alignment error includes a distance between the first vertical reference line and the second vertical reference line and a distance between the vertically aligned first vertical reference line and second vertical reference line and the first vertical line.

25. The apparatus of claim 18 or 20, wherein:
the alignment driving portion comprises:
a left/right gradient alignment driving portion to provide driving power for enabling the first reference portion and the second reference portion to perform an arc motion in left and right directions;
a forward/backward gradient alignment driving portion to provide driving power for enabling the first reference portion and the second reference portion to perform an arc motion in forward and backward directions; and
an upward/downward alignment driving portion to provide driving power for enabling the first reference portion and the second reference portion to perform a linear motion in upward and downward directions, and
the left/right gradient alignment driving portion, the forward/backward gradient alignment driving portion, and the upward/downward alignment driving portion are disposed in a multi-stage form.

26. The apparatus of claim 25, wherein:
the alignment driving portion further comprises:
a left/right alignment driving portion to provide driving power for enabling the first reference portion and the second reference portion to perform a linear motion in left and right directions, and
the left/right gradient alignment driving portion, the forward/backward gradient alignment driving portion, the upward/downward alignment driving portion, and the left/right alignment driving portion are disposed in a multi-stage form.

27. The apparatus of claim 26, wherein:
the alignment driving portion further comprises:
a rotation driving portion to provide driving power for rotating the first reference portion and the second reference portion, and
the left/right gradient alignment driving portion, the forward/backward gradient alignment driving portion, the upward/downward alignment driving portion, the left/right alignment driving portion, and the rotation driving portion are disposed in a multi-stage form.

28. The apparatus of claim 20, wherein the alignment controlling portion receives image data of the horizontally aligned first reference line and second reference line through the other-way camera between left-eye and right-eye cameras, extracts a horizontal alignment error of the horizontally aligned first reference line and second reference line with respect to a second horizontal line passing an optical axis of the other-way camera, generates a horizontal alignment rig driving signal for compensating for the horizontal alignment error, and transmits the horizontal alignment rig driving signal to a rig controlling portion for controlling a motion of a rig of the other-way camera.

29. The apparatus of claim 28, wherein the horizontal alignment error includes a gradient between the second horizontal line and the horizontally aligned first reference line and second reference line, and a distance between the second horizontal line and the horizontally aligned first reference line and second reference line.

30. The apparatus of claim 28, wherein the rig controlling portion receives the horizontal alignment rig driving signal and controls the motion of the rig of the other-way camera to horizontally align the second horizontal line, and the horizontally aligned first reference line and second reference line.

31. The apparatus of claim 22, wherein the alignment controlling portion receives image data of the predetermined first vertical reference line and the predetermined second vertical reference line through the other-way camera between the left-eye camera and the right-eye camera, generates a vertical alignment rig driving signal for feedback-controlling the predetermined first vertical reference line, the predetermined second vertical reference line, and a second vertical line passing an optical axis of the other-way camera to be vertically aligned, and transmits the vertical alignment rig driving signal to a rig controlling portion for controlling a motion of a rig of the other-way camera.

32. The apparatus of claim 31, wherein the rig controlling portion receives the vertical alignment rig driving signal, and controls the motion of the rig of the other-way camera to align the second vertical line passing the optical axis of the other-way camera, and the vertically aligned predetermined first vertical reference line and predetermined second vertical reference line.

33. An optical axis alignment method using an optical axis alignment apparatus for three-dimensional (3D) photographing of claim 1, the method comprising:
a) receiving image data of a first reference line and a second reference line, at least one first vertical reference line, and at least one second vertical reference line orthogonal to the first reference line and the second reference line, respectively, through a one-way camera between left-eye and right-eye cameras;
b) performing alignment of a first horizontal line passing an optical axis of the one-way camera, the first reference line, and the second reference line based on the received image data of the first reference line and the second reference line;
c) performing alignment of a first vertical line passing the optical axis of the one-way camera, the predetermined first vertical line reference line, and the predetermined second vertical reference line based on the received image data of at least one first vertical reference line and at least one second vertical reference line;
d) receiving image data of the first reference line and the second reference line aligned in the b) and image data of the at least one first vertical reference line and at least one second vertical reference line aligned in the c), through the other-way camera between the left-eye and right-eye cameras;
e) performing alignment of a second horizontal line passing an optical axis of the other-way camera, and the predetermined first reference line and the predetermined second reference line received in the d), based on the image data of the first reference line and the second reference line received in the d); and
f) performing alignment of a second vertical line passing the optical axis of the other-way camera, and the predetermined first vertical reference line and the predetermined second vertical reference line received in the d), based on the image data of the first vertical reference line and the second vertical reference line received in the d).

34. The method of claim 33, wherein the b) comprises:
b-1) displaying the first reference line and the second reference line on a screen of the first horizontal line; and
b-2) driving an alignment portion to horizontally align the displayed first horizontal line, the first reference line, and the second reference line.

35. The method of claim 33, wherein the b) comprises:
b-3) extracting a gradient between the first horizontal line and the first reference line or the second reference line, and a distance between the first reference line and the second reference line;
b-4) driving an alignment portion to horizontally align the first reference line and the second reference line by compensating for the gradient and compensating for the distance between the first reference line and the second reference line;
b-5) extracting a distance between the first reference line and the second reference line horizontally aligned in the b-4), and the first horizontal line; and
b-6) driving the alignment portion to horizontally align the first horizontal line and the horizontally aligned first reference line and second reference line by compensating for the distance extracted in the b-5).

36. The method of claim 33, wherein the c) comprises:
c-1) displaying the first vertical reference line and the second vertical reference line on a screen of the first vertical line; and
c-2) driving an alignment portion to vertically align the displayed first vertical line, the first vertical reference line, and the second vertical reference line.

37. The method of claim 33, wherein the c) comprises:
c-3) extracting a distance between the first vertical reference line and the second vertical reference line;
c-4) driving an alignment portion to vertically align the first vertical reference line and the second vertical reference line by compensating for the distance extracted in the c-3);
c-5) extracting a distance between the first vertical reference line and the second vertical reference line vertically aligned in the c-4) and the first vertical line; and
c-6) driving an alignment portion to vertically align the first vertical line and the vertically aligned first vertical reference line and second vertical reference line by compensating for the distance extracted in the c-5).

38. The method of claim 33, wherein the e) comprises:
e-1) displaying the first reference line and the second reference line horizontally aligned in the c), on a screen of the second horizontal line; and
e-2) driving a rig of the other-way camera to horizontally align the displayed second horizontal line, the first reference line, and the second reference line.

39. The method of claim 33, wherein the e) comprises:
e-3) extracting a gradient between the second horizontal line and the first reference line or the second reference line and a distance between the first reference line and the second reference line;
e-4) driving a rig of the other-way camera to horizontally align the first reference line and the second reference by compensating for the gradient and compensating for the distance between the first reference line and the second reference line;
e-5) extracting a distance between the first reference line and the second reference line horizontally aligned in the e-4) and the second horizontal line; and
e-6) driving a rig of the other-way camera to horizontally align the second horizontal line and the horizontally aligned first reference line and second reference line by compensating for the distance extracted in e-5).

40. The method of claim 33, wherein the f) comprises:
f-1) displaying the predetermined first vertical reference line and the predetermined second vertical reference line received in the d), on a screen of the second vertical line; and
f-2) driving a rig of the other-way camera to align the displayed first vertical reference line and second vertical reference line, and the second vertical line.

41. The method of claim 33, wherein the f) feedback-controls a rig of the other-way camera to vertically align the second vertical line, the first vertical reference line, and the second vertical reference line.

42. The apparatus of claim 5, wherein the plate is formed as a mirror, and the second reference line is formed as a reflected image of the first reference line that is reflected from the mirror.

43. The apparatus of claim 6, wherein the plate is formed as a mirror, and the second vertical reference line is formed as a reflected image of the first vertical reference line that is reflected from the mirror.
